(19)

Europäisches
Patentamt
European
Patent Office
Office européen
des brevets

(11)  **EP 2 015 510 B1**

(12)  **EUROPEAN PATENT SPECIFICATION**

(45) Date of publication and mention
of the grant of the patent:
**02.03.2016  Bulletin 2016/09**

(51) Int Cl.:
*H04L 12/24* (2006.01)       *G06F 9/50* (2006.01)
*G06F 9/445* (2006.01)

(21) Application number: **08009613.4**

(22) Date of filing: **27.05.2008**

(54) **Deployment planning of components in heterogeneous environments**

Einsatzplanung von Komponenten in heterogenen Umgebungen

Planification de déploiement de composant dans des environnements hétérogènes

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **05.06.2007  US 810357**

(43) Date of publication of application:
**14.01.2009  Bulletin 2009/03**

(73) Proprietor: **SAP SE
69190 Walldorf (DE)**

(72) Inventors:
• **Anke, Jürgen
01099 Dresden (DE)**
• **Wolf, Bernhard
01217 Dresden (DE)**
• **Hackenbroich, Gregor
01279 Dresden (DE)**

(74) Representative: **Hössle Patentanwälte
Partnerschaft
Postfach 10 23 38
70019 Stuttgart (DE)**

(56) References cited:
**EP-A- 1 788 480      EP-A- 1 892 656
WO-A1-03/094388**

• **JURGEN ANKE ET AL: "Cost-based Deployment
Planning for Components in Smart Item
Environments" EMERGING TECHNOLOGIES
AND FACTORY AUTOMATION, 2006. ETFA '06.
IEE E CONFERENCE ON, IEEE, PI, 1 September
2006 (2006-09-01), pages 1238-1245,
XP031082709 ISBN: 978-0-7803-9758-3**
• **ANKE J ET AL: "Early data processing in smart
item environments using mobile services"
PROCEEDINGS OF THE IFAC SYMPOSIUM
INFORMATIONS CONTROL PROBLEMSIN
MANUFACTURING TECHNOLOGY, XX, XX, vol. 1,
1 January 2006 (2006-01-01), pages 823-828,
XP008085818**

## Description

### Technical Field

This description relates to technologies involving deployment planning of components for processing of source data to hosts in heterogeneous environments.

### Background

Components may include, for example, software components that provide services, and heterogeneous environments may include smart item environments. Smart item technologies may include, for example, radio-frequency identification (RFID) systems, embedded systems, sensor motes, and/or sensor networks, and may be used, for example, to provide business software applications with fast access to real-world data. For example, smart item technologies may be used to support the detection, reading, or writing of RFID tags, as well as to support communication with, and control of, wireless sensor networks and embedded systems. In many instances, smart items may include devices having local processing power, memory, and/or communication capabilities, that are capable of providing data about the device and its properties, or information about a current state or environment of the smart item devices. For example, a physical object may include a product embedded information device (PEID), which may include, for example, an embedded computing unit, an RFID tag, etc., to enable close coupling of real world events to backend information systems. Accordingly, some such devices may be used in the execution of service components of back-end or underlying business applications to collect, process, or transmit business data.

Examples of smart item devices include an RFID tag, which may be passive or active, and which may be attached to an object and used to provide product or handling information related to the object. Other examples of smart item devices include various sensors, such as, for example, environmental sensors (e.g., a temperature, humidity, or vibration sensor), which may be capable of communicating to form one or more sensor networks. These and other types of smart item devices also may include embedded systems, which may refer generally to any system in which a special-purpose processor and/or program is included, and/or in which the system is encapsulated in the device being controlled or monitored.

Through automatic real-time object tracking, smart item technology may provide businesses with accurate and timely data about business operations, and also may help streamline and automate the business operations. Accordingly, cost reductions and additional business benefits (e.g., increased asset visibility, improved responsiveness, and extended business opportunities) may be obtained.

As an example scenario, a business may need to track a lifecycle of a product. A product's lifecycle may include the phases beginning-of-life (e.g., design, production), middle-of-life (e.g., use, maintenance), and end-of-life (e.g., recycling, disposal). Example business goals related to product lifecycle management may include design improvements, adjustment of production parameters, flexible maintenance planning, and effective recycling. In order to achieve these business goals, the business may need to acquire information relating to the actual behavior and condition of the product. As an example, PEIDs with attached sensors can monitor the usage of products and their environment during their whole lifecycle and make the recorded data available to backend systems, such as maintenance planning, fleet management, and product data management (PDM) systems. Depending, for example, on the number of sensors embedded in the product and the respective sampling rates, large amounts of data may be generated for a single product. This may become even more problematic when multiple products need to be monitored (e.g., in a truck fleet). Furthermore, if products are mobile, they may have only a low bandwidth network or intermittent network connection. Therefore, the transmission of raw field data to backend systems may not be feasible in many cases.

Some systems may use message-oriented middleware to enable communication between smart items such as PEIDs and backend systems. For example, the middleware may be configured to transport data from a PEID to a backend system, where the data may then be processed. In the area of wireless sensor networks, for example, middleware may be used for connection of the wireless sensor nodes of the wireless sensor network, either among the nodes themselves or to the backend application for further evaluation and processing of the data. In this context, there may exist intermittent connections, for example, due to movement of the nodes that enable the communication. Thus, data or results may either be lost, or may need to be stored on the nodes.

For some smart items for which very large amounts of real-time data need to be processed, for example, the storage capacity and/or the processing capacity of the nodes may be insufficient to handle the data, and thus dependability or integrity of results may be compromised. For example, while recording real-world data of products using PEIDs enables more accurate analysis, it also may pose the problem of creating large amounts of data by periodic recording from sensors (e.g., sampling). Depending, for example, on the type of sensor and the data resolution required for a particular application, a sampling frequency may be defined. For example, an outside temperature sensor may be read in intervals of a predefined number of minutes, as temperature variations may be expected to occur gradually, in a range of minutes.

In contrast, an acceleration sensor which may be used to detect vibration patterns may be read a few hundred times per second, as otherwise, relevant vibrations may not be detected. Assuming that for each recording a 4 Byte numeric value is stored, the temperature sensor may create 5.625 KBytes of raw data per day (i.e., 1, sample per minute), whereas the acceleration sensor may create 33750 KBytes of raw data per day (i.e., 100 samples per second).

Since PEIDs may have limited memory capacity, they may not be able to store the recorded data for long time periods. Therefore, the data may need to be transmitted to another system for analysis or be processed locally with the results being sent to backend systems, if needed. However, performing all necessary analysis on the product and transmitting only the result may not be feasible, as a PEID may have very limited resources and/or power supply and/or connectivity. Moreover, for example, some data processing steps may require additional input from secondary databases or other products, which may not be available on the individual product. However, a mere determination of placements in the network of executables for performing the data processing may lead to inefficiencies, including, for example, unacceptable throughput levels. Other examples of heterogeneous environments may include online ordering systems, in which a user may submit data via a device such as a personal digital assistant (PDA) having intermittent connectivity with a server.

JURGEN ANKE ET AL: "Cost-based Deployment Planning for Components in Smart Item Environments" EMERGING TECHNOLOGIES AND FACTORY AUTOMATION, 2006. ETFA '06. IEE E CONFERENCE ON, IEEE, PI, 1 September 2006 (2006-09-01), pages 1238-1245 discloses the deployment of software components composing a composite service on network devices such as PEID. A deployment recommendation is based on node resources and network resources costs after having evaluated several deployment scenarios.

**Summary**

According to one general aspect, a system may include a middleware layer including a request handling layer and a device handling layer, the middleware layer in communication with an application and a device layer including one or more devices. The request handling layer may include a service repository that is configured to store at least one composite service in association with service metadata describing an ordering of execution of component services of the composite service. The request handling layer may further include a distribution manager that is configured to determine one or more deployment plans, to service execution environments, of the component services associated with the composite service associated with an analysis of data generated by one or more data sources, the composite service including the ordering of execution of the associated component services for the analysis of the data, at least one of the service execution environments located at a first network node included in the device layer and at least one other one of the service execution environments located at a second network node included in the middleware layer. The distribution manager is configured to determine an evaluation of each of the deployment plans of the component services based on a first metric associating one or more weighted values with a consumption by the each deployment plan of one or more respective resources associated with each of the first and second network nodes and on a second metric associating one or more weighted values with a measure of connection availability of one or more network links included in a communication path between the first and second network nodes. The distribution manager is configured to determine a recommendation including one or more of the deployment plans based on the evaluation.

According to another general aspect, a distribution manager may be configured to determine one or more deployment plans, to service execution environments, of component services associated with a composite service associated with an analysis of data generated by one or more data sources, the composite service including an ordering of execution of the associated component services for the analysis of the data, at least one of the service execution environments located at a first network node included in the device layer and at least one other one of the service execution environments located at a second network node included in the middleware layer. The distribution manager may be further configured to determine an evaluation of each of the deployment plans of the component services based on a first metric associating one or more weighted values with a consumption by the each deployment plan of one or more respective resources associated with each of the first and second network nodes and on a second metric associating one or more weighted values with a measure of connection availability of one or more network links included in a communication path between the first and second network nodes, and to determine a recommendation including one or more of the deployment plans based on the evaluation.

According to another general aspect, one or more deployment plans, to service execution environments, of component services associated with a composite service associated with an analysis of data generated by one or more data sources, may be determined, the composite service including an ordering of execution of the associated component services for the analysis of the data, at least one of the service execution environments located at a first network node associated with a device layer and at least one other one of the service execution environments located at a second network node associated with a middleware layer that includes a request handling layer and a device handling layer. An evaluation of each of the deployment plans of the component services may be determined based on a first metric associating one or more weighted values with a consumption by the each deployment plan of one or more respective resources associated with each of the first and second network nodes and on a second metric associating one or more weighted values with a measure of connection availability of one or more network links included in a communication path between the first and second network nodes. A recommendation including one or more of the deployment plans based on the evaluation may be determined.

The details of one or more implementations are set forth in the accompanying drawings and the description below. Other features will be apparent from the description and drawings, and from the claims.

**Brief Description of the Drawings**

Figure 1 is a block diagram of an example system for processing data obtained by smart item devices.

Figure 2 is a block diagram illustrating an example composition of services.

Figure 3 is a block diagram of an example infrastructure view of an example system for processing data obtained by smart item devices.

Figure 4 is a block diagram illustrating an example composition of services.

Figure 5 is a block diagram illustrating an example technique for component deployment planning.

Figure 6 depicts an example undirected graph describing an example infrastructure.

Figure 7a-7b depict example directed graphs describing example compositions of services.

Figure 8 is a flowchart illustrating example operations of the system of Figure 1 for determining an example recommendation for mapping components of a composite service.

Figure 9 is a flowchart illustrating example operations of the system of Figure 1.

Figure 10 depicts an example mapping of example bitrate demands to network links.

Figure 11a-11b depict example timing intervals describing example intermittent connections.

Figure 12 is a block diagram illustrating example utilizations of example network links.

Figure 13 is a flowchart illustrating example operations of the system of Figure 1 for product lifecycle management.

Figure 14 depicts an example distribution of the example composition of Figure 4 on the example infrastructure of Figure 3.

Figure 15 depicts an example distribution of the example composition of Figure 4 on the example infrastructure of Figure 3.

**Detailed Description**

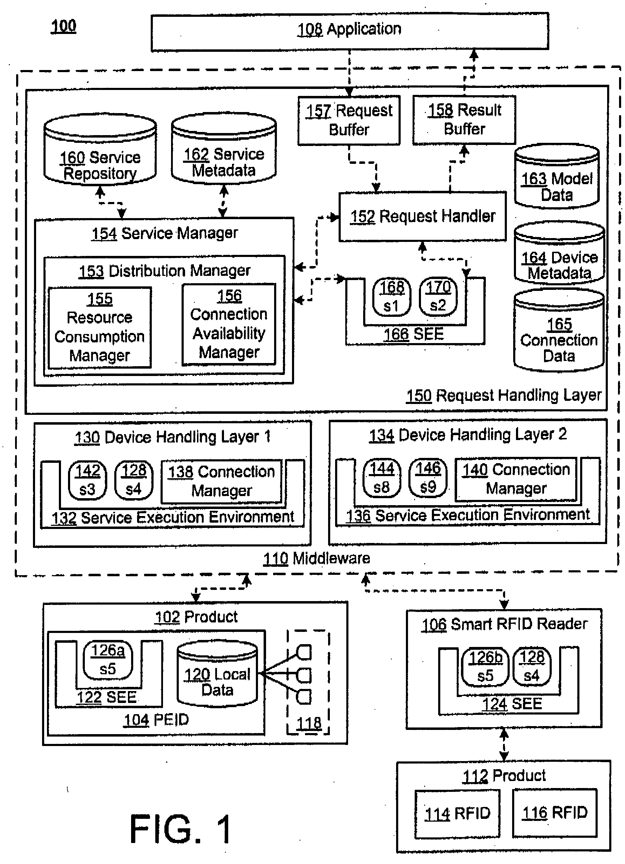

Figure 1 is a block diagram of an example system 100 for processing data obtained by smart item devices. In the example of Figure 1, various smart item devices, for example, a product 102 that includes a product embedded information device (PEID) 104 and a smart radio-frequency identification (RFID) reader 106, provide real-world data to one or more applications 108 in a timely and accurate manner, using middleware 110 to pre-process data received from the smart item devices. For example, the smart RFID reader 106 may read objects having an RFID tag, for example, a product 112 having RFID tags 114 and 116. For example, the product 112 may include a portable computer having the RFID tag 114 attached to its chassis and the RFID tag 116 attached to a mini-mouse. The smart RFID reader 106 may, for example, thus read, or sense the RFID tags 114 and 116 as a person carrying the portable computer carries the chassis and the mouse past a station having the smart RFID reader attached thereto. As another example, the PEID 104 may receive data from sensors 118 that may be stored in local data storage 120. For example, the sensors 118 may sense temperature, vibration, and/or pressure relating to the product 102. For example, the product 102 may include an engine having the PEID 104 attached thereto, and the sensors 118 may be configured, for example, to detect temperature, humidity, and/or vibration in close proximity to the engine.

A PEID such as the PEID 104 may contain data about a product and may transmit the data upon request. Data may be provided by reading from a local memory such as the local data storage 120 or by accessing sensors that are integrated in the product (e.g., the sensors 118). If the PEID is an embedded system, it may contain local data processing, e.g. for continuous recording of sensor data, or computation of statistics. PEIDs may be mobile, e.g. may be embedded in vehicles, and may connect to a device handler (such as the device handling layer 1 130) via a wireless connection.

In Figure 1, each of the PEID 104 and the smart RFID reader 106 may include a central processing unit (CPU) and a memory (not shown), as well as other standard components. Further, the PEID 104 may include a service execution environment (SEE) 122 and the smart RFID reader 106 may include a service execution environment (SEE) 124. Thus, the PEID 104 and the smart RFID reader 106 should be understood to be capable of various levels of computing capabilities, including, for example, processing or transmitting sensed data. The service execution environments 122, 124 may include a container, in which services may be executed in an adaptable and flexible manner. Thus, the service execution environment 122 and the service execution environment 124 may be used for service relocation, for example, for relocating services that may pre-process raw data received by the smart item devices so that only pre-processed results may be sent to the application 108, instead of requiring all raw data to be transmitted to the application 108 for processing at the backend system.

Thus, example services that may be relocated to the service execution environment 122 and the service execution environment 124 may be configured to calculate, for example, a linear regression of data values, a moving average of data values, threshold monitoring, a notification, or a number of occurrences of an event or item. As an example, the service execution environments 122, 124 may be implemented utilizing an Open Services Gateway initiative (OSGi) service platform. Such an OSGi service platform may provide component management capabilities for dynamically deployable applications, libraries, and services. Using a platform such as OSGi, services may easily be deployed, started, stopped, and removed from the service execution environment. Thus, services, applications and service-oriented Applications Programming Interfaces (APIs) may be, for example, remotely downloaded to, upgraded in, or removed from mobile devices. According to an example embodiment, a platform such as Jini, from Sun Microsystems, may also be used. According to an example embodiment, a unified service execution environment may be embedded in middleware nodes, PEIDs, and smart RFID readers to enable a flexible distribution of services. According to an example embodiment, services may be deployed and executed on PEIDs and middleware nodes.

Thus, the PEID 104 and the smart RFID reader 106 may be configured to collect, process, filter, aggregate, or transmit data that may be useful to the application 108, for example, a business data processing application. For example, the application 108 may include inventory management, supply chain management, retail store management, warehouse management, and any other process or application that may be used to execute business processes with respect to real-world objects, where such real-world objects may include, for example, products for sale, pallets or other shipment elements, patients, or manufacturing materials/equipment. By tracking and analyzing such real-world objects, the application 108 may be used, for example, to determine inventory levels, set pricing levels, evaluate marketing strategies, evaluate manufacturing or production technologies, reduce theft, or maintain safety. The application 108 may also be used for product lifecycle management (PLM), for example, to determine uses, locations, and conditions of products over time.

By including pre-processing capabilities at smart items such as the PEID 104 and the smart RFID reader 106, processing may be performed very early in the data-collection process(es), so that a burden placed on the application 108 may be reduced or eliminated. Further, the pre-processing may lessen the amount of data to be transmitted from the devices to the middleware layer. For example, the application 108 may be located at a corporate headquarters, and the PEID 104 and the smart RFID reader 106 may be dispersed across a large geographical region connected by a wide area network, which may be connected via wireless connections. As such, for example, the application 108 may only require certain subsets or characterizations of data collected by the PEID 104 and the smart RFID reader 106, and may not need or want all collected, raw data.

In some implementations, the application 108 may include compound or composite applications that are made from re-usable software components or services that are designed to perform some well-defined task(s). Also, in these or other implementations, the application 108 may include legacy applications that may not easily communicate with data-collection devices (or with other business data processing systems), and, in such cases, services or service components may be provided as interfaces between the legacy applications and the data collection devices and/or other systems. The system 100 may enable these and other applications and services to be deployed directly on the PEID 104 and the smart RFID reader 106, for example, via the service execution environments 122 and 124, so that, for example, services may be run on the devices (e.g., data may be collected and/or processed) in a timely, efficient, reliable, automated, cost-effective, and scalable manner.

Thus, for example, complex business processes, or composite services, may be decomposed into lightweight, portable individual services and may be deployed at different devices. For example, a service s5 126 (e.g., service s5 126a and service s5 126b) may be deployed and executed in the SEE 122 of the PEID 104 and in the SEE 124 of the smart RFID reader 106. As an example, a composite service may need a count of the number of readings per hour performed by a device such as the PEID 104 or the smart RFID reader 106. The service s5 126, for example, may be configured to calculate such a count for each of the PEID 104 and smart RFID reader 106. The pre-processed result may then be used, for example, by other decomposed services of the composite service. As another example, a service s4 128 may be deployed and executed in the SEE 124 of the smart RFID reader 106. However, the PEID 104 and the smart RFID reader 106, for example, may not include sufficient processing or storage capabilities to handle all such decomposed services that the application 108 may require for processing data.

The middleware layer 110 may include a device handling layer 1 130 that may include a service execution environment 132, and a device handling layer 2 134 that may include a service execution environment 136. Each of the device handling layer 1 130 and the device handling layer 2 134 may be configured to manage the devices at the device level, for example the PEID 104 and the smart RFID reader 106. As discussed previously, the service execution environments 132 and 136 may each include a container, in which services may be executed in an adaptable and flexible manner. Thus, services may flexibly and adaptably be deployed and executed in each of the service execution environments 132 and 136. As shown in the example system 100 of Figure 1, the service execution environments 132 and 136 may each include a connection manager 138 and 140, respectively. The connection managers 138 and 140, for example, may be configured to manage connections, for example, wireless connections, between the middleware 110 and the devices such as the PEID 104 and the smart RFID reader 106. Thus, if a connection is intermittent, for example, due to travel by a device, or due to noise interference in the signal, the connection managers 138 and 140 may be configured to attempt to maintain connectivity with the devices, even if the connection is intermittent, or to report breaks in connectivity to the application 108. Therefore, transmission of data from the devices may be sporadic.

As shown in Figure 1, the service execution environments 132 and 136 may include services s3 142, s4 128, s8 144, and s9 146, which may be adaptively and flexibly located and executed on each of the device handling layers 130 and 134. Thus, for example, the service s5 126a may be deployed to the PEID 104 to obtain a series of temperatures from the sensors 118 via the local data storage 120, and to calculate an average temperature value for a predetermined number of temperature values. The service s4 128 may be deployed to the device handling layer 1 130, for example, to obtain the resulting average temperature values from the PEID 104, and, for example, to calculate a slope for successive values. The service s3 142 may then obtain the resulting slope and compare the slope value to a predetermined threshold value and generate an alarm message to be sent to a request handling layer 150 if the slope value exceeds the threshold value. The processing may be achieved by initiating execution of the service s3 142, which may in turn initiate execution of the service s4 128, which may in turn initiate execution of the service s5 126a, for example, via a service call mechanism that allows passing parameter values among the services. The pre-processed result values are returned by each of the services in succession by the ordering of execution of the called services.

Thus, a significant amount of pre-processing of the data from the sensors 118 may be performed, for example, first at the PEID 104 at the device level, and then at the device handling layer 1 130 in the middleware 110, thus easing the processing burden on the application 108 that may need to receive such alarm information regarding temperature levels of the product 102. Furthermore, by pre-processing the temperature values as an average value at the PEID 104, only the average value needs to be sent from the device layer to the middleware 110, thus significantly decreasing the amount of data sent from the device layer to the middleware layer 110, and on to the application 108 that may be located at a backend system.

The request handling layer 150 may include a request handler 152, a distribution manager 153, and a service manager 154. The distribution manager 153 may include a resource consumption manager 155 and a connection availability manager 156. The request handler 152 may be configured to receive requests for information, for example, requests for analysis results related to PEIDs or other devices, from backend systems or other applications such as the application 108. In one aspect, the request handler 152 may operate as a request/response mechanism. However, the request handler 152 may be extended to provide subscriptions on information requests so that the requesting application 108 may receive subscribed information triggered, for example, by changes in values or in regular predefined intervals. For example, the application 108 may request analysis results regarding the temperature of the product 102 whenever the temperature fluctuates more than a predetermined amount, or every minute. For example, the application 108 may request an alert if the temperature of the product 102 increases more than 10 degrees in one minute or less.

According to an example embodiment, the distribution manager 153 may be configured to determine one or more deployment plans, to service execution environments, of the component services associated with the composite service associated with an analysis of data generated by one or more data sources. The composite service may include the ordering of execution of the associated component services for the analysis of the data, at least one of the service execution environments located at a first network node included in the device layer and at least one other one of the service execution environments located at a second network node included in the middleware layer. The distribution manager 153 may be configured to determine an evaluation of each of the deployment plans of the component services based on a first metric associating one or more weighted values with a consumption by the each deployment plan of one or more respective resources associated with each of the first and second network nodes and on a second metric associating one or more weighted values with a measure of connection availability of one or more network links included in a communication/path between the first and second network nodes, and determine a recommendation including one or more of the deployment plans based on the evaluation.

According to an example embodiment, the resource consumption manager 155 may be configured to evaluate each of the deployment plans based on the first metric, as discussed further below.

According to an example embodiment, the connection availability manager 156 may be configured to evaluate each of the deployment plans based on the second metric, as discussed further below. According to an example embodiment, the connection availability manager 156 may receive information related to connectivity at least from the connection managers 138 and 140.

According to an example embodiment, the request handling layer 150 may include a request buffer 157 configured to store requests received from the application 108 and a result buffer 158 configured to store results from the request handler 152 for the application 108, for example, to enable communication to applications and PEIDs which have only intermittent connectivity. The requests from the application 108 may include at least a product identifier that identifies a specific product, for example, the product 102, and an InfoItemID value identifying the request and servicing required to satisfy the request. For example, if the application 108 requests an update on the temperature of an engine, for example, the product 102, then the request may include a product identifier for the product 102 and an InfoItem specifying, for example, a service such as "Current engine temperature."

The service manager 154 may be configured to handle service tasks related to the management of services, which may include registering and unregistering of services, deploying services to other nodes, loading them into service execution environments, and support for service composition. The service manager 154 may communicate with a service repository 160 and service metadata storage 162, and a service injector (not shown) to accomplish these tasks.

The service repository 160 may be configured to store all available services that may be deployed and executed in the system 100, including, for example, an executable for each service. Additionally, a meta description of each service, including the hardware requirements and other properties, may be stored in the service metadata storage 162.

Composite services, which may include combinations of atomic services for application-specific purposes, may be stored in the service repository 160, as well. The service metadata storage 162 may maintain a list of InfoItems (e.g., information entities) that may be accessed from a PEID as identifying information or attribute information relating to the PEID (e.g., PEID 104). Such InfoItems, for example, may include simple information from a PEID such as a manufacturing date and total mileage of the product 102, or information that is derived by analysis, for example, average mileage per day or engine temperature trend during operation. The InfoItems provided, for example, by the PEID 104, may be retrieved from the PEID 104 when the product 102 is registered in the system 100. InfoItems that are derived from other information by pre-processing in the middleware 110 may be registered using administrative tools (not shown).

In some examples, the same service may be implemented for a plurality of development platforms, e.g., may be implemented for known development platforms that are based on the C/C++ programming language or the Java programming language. By providing such a diversity of development platforms, a given service may be deployable to a wider range or type of devices that may be in use. Information about the development platform(s) of the service in question may be included as a type of the service metadata 162, along with, for example, any of the various service requirements or preferences for operating the service.

The service injector may be used to install and start deployed services (e.g., the service s5 126a) on the SEE 122 of the PEID 104. The service injector, further, may more generally be used to manage a life cycle of the service(s), e.g., by performing service updates or stopping the service when necessary. Thus, one task of the service injector may include transferring concrete service code (e.g., an appropriate one of the service executable(s) of the service repository 160) to a selected device(s). Thus, the service injector receives and installs the kind of code in question. Such an install component as the service injector, although not shown in Figure 1, may be installed on the device-side as either a single standalone software component, or may cooperate with other installation components in order to distribute the service executables of the service repository 160. In the latter case, for example, if all selected devices for a requested service installation may not be reached, for example, due to a lapse in connection of a device, then, for example, a list may be maintained of currently unreachable devices that are intended to receive a service so that when they become reachable, the service injector may be alerted to accomplish the installation. After installing, for example, the service s5 126a, the service s5 126a may be kept in an inactive state until the service injector sends a start-up signal to change the service to an active state. In a similar way, the service injector may be used to organize the updating and stopping of services.

As discussed previously, the service manager 154 may further include the distribution manager 153 that may be configured to determine valid deployment plans of requested component services, model the deployment plans, evaluate the deployment plans, and generate a recommendation of one or more of the deployment plans for mapping the requested component services onto service execution environments located on nodes in a network infrastructure. A model data storage 163 may be configured to store representations or models of the network infrastructure, of service compositions, and load models to be used by the distribution manager 153 for determining, for example, potential deployment plans of the component services for mappings to service execution environments for execution.

The resource consumption manager 155 may be configured to determine evaluations of deployment plans of component services based on one or more metrics associating one or more weighted values with a consumption by each deployment plan of one or more respective resources associated with each network node included in a network.

The connection availability manager 156 may be configured to determine evaluations of deployment plans of component services based on one or more metrics associating one or more weighted values with a measure of connection availability of one or more network links included in communication paths between network nodes.

The request handling layer 150 may further include device metadata storage 164 that includes information relating to devices, for example smart item devices such as the PEID 104 and the smart RFID reader 106 at the device layer and to devices at the device handling layers 130 and 134. Such information may include manufacturer information, manufacturing date, battery type, battery usage, battery cost, battery capacity, CPU type, CPU utilization, etc. that may be utilized, for example, by the service manager 154, in combination with the service metadata 162, in determination for deployment of services from the service repository 160, for example, to service execution environments 122, 124, 132, 136, and a service execution environment (SEE) 166 that may, for example, receive deployed services s1 168 and s2 170 for execution at the request handling layer 150. The device metadata 164 may include, for example, a device description, a software description, a hardware description, and a device status. For example, the device description may include a device name, identifier, or type, or may include vendor information including a vendor name or vendor website. The software description may include an operating system description, including version and/or vendor, or may include a description of services running or allowed to run on the device platform. The hardware description may include information about attributes of a CPU of a device (e.g., name or speed), a memory of a device (e.g., total and/or free amount of memory), or connection capabilities (e.g., connection speed or connection type) of the device(s). The device status may include more volatile information, including a device location, current CPU usage, or remaining power or memory. Of course, other device aspects or information may be included in the device metadata 163, as would be apparent. For example, the device metadata 164 may include information about other devices, such as where the device 106 includes an RFID reader, and the device metadata 164 may include a description of types of RFID tags 114, 116 that may be read and/or written to by the smart RFID reader 106.

Further, the service metadata 162 may include a service behavior description, technical constraints of the service, or information regarding input, output, preconditions, or effects (IOPE) of the service. For example, technical constraints may include a required CPU type or speed, an amount of (free) memory that is needed, a type or speed of connection that is required or preferred, an operating system version/name/description, or a type or status of a battery or other device power source(s).

Thus, as with the device metadata 164, distinctions may be made between static and dynamic service requirements, such as hardware requirements. For example, a static value such as a total memory or maximum processing speed may be included, along with dynamic values such as available memory/processing/power and/or a number or type of other services that may be allowed to concurrently run on a device together with the service(s) in question, at an execution time of the service(s).

Construction and use of the service metadata 162 may differ depending on whether the service(s) are considered to be a compound (or composite) service and/or an atomic service. In this regard, an atomic service may refer to a discrete service that runs on a single device, while a compound or composite service may refer to a higher-level service that includes and combines one or more atomic services. For example, a compound service may be deployed in order to provide a cumulative or aggregated function(s), and an atomic service may refer to services that are deployed to individual devices 102, 106. For example, the product 102 may include temperature sensors 118 dispersed in a defined area to determine a temperature distribution or gradient in the area, in which case the PEID 104 may execute a temperature-collection service (e.g., the service s5 126a on the PEID 104), while a compound service s4 128 at the device handling layer 1 130 may aggregate the temperature data of several devices and determine information about the temperature distribution or gradient. Thus, for example, it should be understood that part of the service metadata 162 for a compound or composite service may include information regarding atomic services that comprise the compound or composite service.

As another example, a composite service may include multiple component services. An initiation of execution of the composite service may include a call to the composite service, which may result in a call to one of the component services, which may result further in a call to another component service. Each of the services may receive and/or return parameter values, and the calls to the services may be initiated via an entry point of execution of the respective service. For example, the request handler 152 may receive a request from the application 108 for information relating to, for example, a product such as the product 102.

As an example, the product 102 may include an engine and the request may include a request for a notification whenever the engine temperature rises too fast. Thus, servicing the request may be fulfilled by executing a composite service "temperature monitor" which may include at least four component services such as:

(1) a data collector service configured to read from a temperature sensor at a predetermined interval and generate a time series;

(2) a trend service configured to receive the time series, perform a linear regression on it, and return the slope;

(3) a threshold service configured to compare the slope to a predetermined threshold, and return a value of true if the slope exceeds the threshold and return a value of false otherwise; and

(4) a message service configured to generate a temperature warning message that is sent as a result to the application 108, if a value of true is returned by the threshold service.

Each of the component services may be implemented as lightweight, relocatable executables that may be easily deployed to various service execution environments for execution and interoperability with other services. Thus, for example, the data collector service may be configured as an executable and stored in the service repository 160 with corresponding descriptive metadata (e.g., description of functionality and input and output parameters) stored in the service metadata storage 162. Similarly, the trend service, the threshold service, and the message service may each be configured as an executable and stored in the service repository 160 with corresponding descriptive metadata (e.g., description of functionality and input and output parameters) stored in the service metadata storage 162. Further, the information describing the composite service "temperature monitor" may be stored in the service metadata storage 162, for example, the composite service name, indicators of the component services, and an indication of an ordering of execution of the component services to achieve the desired result of the processing.

Thus, as an example, the application 108 may send a request for a "temperature monitor" for the product 102 to the request handler 152. As discussed previously, the request may include information specific to the specified product 102, as well as an InfoItem identifying the requested service. If the product 102 is currently not connected to the middleware 110, as may be determined, for example, by the connection manager 138, the request may be stored in the request buffer 157 until the product 102 is connected. For example, the connection manager 138 may be sent a request to transmit a "connected" indicator to the request handler 152 when the product 102 is connected to the device handling layer 1 130.

When it is determined that the product 102 is connected, the request handler 152 may send the "temperature monitor" request to the service manager 154, which may access the service metadata 162 to obtain information regarding the composite service "temperature monitor." The service manager 154 may determine that the composite service includes at least four component services s5 126 (e.g., the data collector service), s4 128 (e.g., the trend service), s3 142 (e.g., the threshold service), and s2 170 (e.g., the message service), wherein an executables for each service may be included in the service repository 160 and associated metadata may be included in the service metadata 162. Based on the composite service metadata, the service manager 154 may further determined an entry point for processing, and an ordering of execution and processing of data for the component services s5 126, s4 128, s3 142, and s2 128, as well as information relating to the parameters utilized in executing the services and passing and returning items.

The service manager 154 may then access the device metadata 164 to obtain device information to determine how much of the component service processing may be deployed and executed, for example, at the product 102 (e.g., at the SEE 122). Since the example ordering of execution may indicate that service s5 126 needs to be performed to process the data from the sensors 118 before the service s4 128 may process a result of that processing, the service manager 154 may determine that the component service s5 126a may be deployed to the SEE 122 for execution at the product 102 (e.g., an engine needing temperature monitoring). As the service s4 128 would conveniently reduce the further transmission of data to the application 108, as well as, for example, reducing the amount of processing of data at the backend system of the application 108, the service manager 154 may determine, based on the service metadata 162 and the device metadata 164, whether the service s4 128 may also be deployed and executed at the product 102.

If the SEE 122 may not conveniently accommodate the service s4 128, then the service manager 154 may determine, for example, that the SEE 132 of the device handling layer 1 130 may be used for deployment and execution of the next (e.g., by execution ordering) services s4 128 and s3 142. The service manager may then determine that the service s2 170 may be deployed and executed at the SEE 166 at the request handling layer 150, such that the request manager 152 may initiate execution of the composite service by initiating execution at an entry point located in the service s2 170, for example, resulting in a call from the service s2 170 to the threshold service (e.g., s3 142), such that if the threshold service (e.g., s3 142) returns a result of true, then the service s2 170 may generate a temperature warning message to be returned to the application 108. As deployed, the services s5 126a, s4 128, s3 142, and s2 170 may then enable pre-processing of the raw data of the sensors 118 at the device level, with a pre-processed result to be returned to the middleware layer 110 for further processing, with a single analysis result of that processing (e.g., a warning message) returned to the application 108. Thus, a significant decrease in transmission and processing of data is achieved at the application 108 level, with more processing achieved at the lower levels such as the device layer and the middleware layer 110. Moreover, the component services may be implemented as lightweight, reusable, and relocatable services that may be dynamically deployed and relocated as conditions change in the system 100.

Furthermore, the service metadata 162 may include a list of the component services s2 170, s3 142, s4 128, and s5 126 associated with an InfoItem associated with the composite service "temperature monitor," and metadata for each of the component services s2 170, s3 142, s4 128, and s5 126, which may be stored in the service repository 162 with executables for each of the component services, may include information regarding entry points for each of the component services, as well as information regarding parameters that may be expected to be passed to each component service or returned as a result of execution of the component services. For example, the service s4 128, which may include the trend service discussed previously, may have associated with it a service executable and metadata indicating that the service s4 128 inputs a parameter including a time series, and outputs a parameter including a slope that results from executing a linear regression on the slope.

The request handling layer 150 may further include a connection data storage area 165 that may be configured to store information regarding network links. For example, the connection data storage area 165 may store information reported by the connection managers 138, 140, and used by the connection availability manager 156.

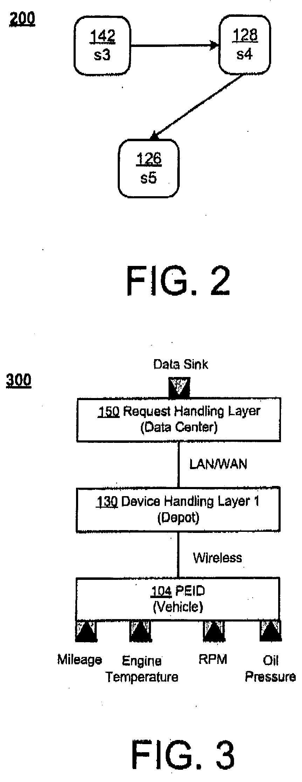

Figure 2 is a block diagram illustrating an example composition of services 200. As discussed previously, a composite service may include multiple component services, such that the composite service may be initiated by a call including an initiation of execution of instructions at a defined entry point of the composite service. The call to the composite service may include a transmission of indicators of parameters and/or parameter values to enable exchange of data and results among the services. The component services may be installed. The component services may have an ordering defined by an ordering of execution of the services as discussed previously, for example, with regard to the composite service "temperature monitor." As shown in Figure 2, the component service s3 142 (e.g., the threshold service) may initiate execution of the component service s4 128 (e.g., the trend service), which may initiate execution of the component service s5 126a (e.g., the data collector service), which, for example, may be deployed to the SEE 122 of the PEID 104 at the device level in order to reduce the amount of data transmitted to the backend system of the application 108, as well as to reduce the amount of processing of data at the backend system.

Further, the component service s5 126a may return a result of its data collector processing (e.g., a time series) to the component service s4 128, which, for example, may be deployed to the SEE 132 of the device handling layer 1 130 of the middleware layer 110. The component service s4 128 may then return a result of its trend processing on the time series (e.g., a slope) to the component service s3 142, which, for example, may also be deployed to the SEE 132 of the device handling layer 1 130 of the middleware layer 110. The component service s3 142 may return a result of its threshold processing on the slope (e.g., a boolean value of true or false) to a service that may have called the component service s3 142, for example, the service s2 170 (e.g., a message service), which may be deployed to the SEE 166 at the request handling layer 150, to return a warning or no message in response to a call to the composite service "temperature monitor." This analysis result may then be placed in the result buffer 158 by the request handler 152, and the application 108 may be informed of its availability for retrieval from the result buffer 158.

Thus, the request for the analysis result may, for example, be decomposed into a deployment of component services, placed according to their ordering of execution such that processing of raw data is performed at the device level, or close to the device level, with intermediate results to be processed by passing pre-processed results up from the device layer to the middleware 110, via device handling layers 130, 134, and on up to the request handling layer 150. Thus, the processing of the raw data of the sensors 118 may be started at the edge devices (e.g., PEID 104), with progressively further pre-processing of intermediate results performed at service execution environments up through the layers until the application 108 is enabled to receive an analysis result that is potentially fully processed for use, for example, in product lifecycle management.

It is to be understood that while each of the services s3 142, s4 128, and s5 126 is illustrated in Figure 2 as communicating only with a single called component service, any of the services may call more than one called service (i.e., one-to-many), and, in other examples, multiple component services may also call a single service (i.e., many-to-one).

Example environments such as smart item environments may be characterized by:

1) Heterogeneity of infrastructure: Infrastructure nodes in the smart item environment may range from resource-constraint embedded system to conventionally equipped personal computers and middleware servers with vast resources. Network links connecting these nodes may also have different capacities.

2) Intermittent connections: PEIDs may communicate with middleware via wireless connections that are not permanently available, which may result from restrictions in the technology (e.g. mobile phone networks do not have full coverage), or from application specifics. For example, if a PEID in a truck connects to a middleware access point in a depot using a wireless LAN connection, the connection may not be available during times when the truck is not is connection range.

3) Distributed data sources: An example application of smart item environments includes collecting and analyzing data provided by products. This data may include static product information, the product structure, the operational status of the product, or historical records of owners, users, maintenance operations, etc. Some of this data may be provided from local memory of the PEID and some may be read from sensors that may be integrated in the product. Other examples of data sources may include rule repositories used for data analysis and thresholds, which may be stored on a middleware server. These data sources may have a predetermined location in the infrastructure and may send a response of a predetermined size when they are queried.

According to an example embodiment, a deployment planning technique for smart item environments may consider these characteristics and the deployment planning technique may:

1) Consider cost of resources: The technique may consider the cost of resources at different hosts in the infrastructure. Although there may be multiple resources, the technique may at least consider CPU, memory, and bitrate, as these resources may be scarce at the edge of the network. For example, an embedded system may include only a small memory, limited CPU power, and may have only low-bitrate connectivity, such as General Packet Radio Service (GPRS) or Institute of Electrical and Electronics Engineers 802.15.42 (IEEE 802.15.42).

2) Evaluate the effect of intermittent connections: Intermittent connections may influence the availability of data in a smart item environment. As component deployment plans may provide better or worse availability, an example technique may advantageously evaluate the effects of intermittent connections on the availability.

3) Explicitly model distributed data sources: Resource consumption may depend on amounts of data that are transferred between the components, and thus between their hosts in the infrastructure. As the data traffic may originate from distributed data sources, the example technique may provide means for explicitly modeling the locations and message sizes of data sources.

Conventional component deployment techniques have not modeled distributed data sources, and have been based on a single evaluation criterion. For example, resource constraints have been considered in some approaches, with no cost-based evaluation of resource consumption, i.e., the resources have been valued the same on all hosts. Such conventional techniques have involved scenarios in which the degree of heterogeneity was low, and hence coat-based evaluation was not considered desirable.

According to an example embodiment, a solution to the component placement problem based on consideration of cost of resources, the effect of intermittent connections, and explicit modeling of distributed data sources may be provided by considering the specifics of smart item environments. According to an example embodiment, a planning technique may assist middleware administrators in determining good initial deployment plans for new sets of components. The example technique may be used at design time, or it may be used at run time with more precise input parameters, as the parameters may be determined from measurements in the actual infrastructure. The example technique may create and rank deployment plan candidates by evaluating their cost of estimated resource consumption and their availability. Expected resource demands may be determined based on a specified load model, and may be added as annotation to the composition model. According to an example embodiment, based on an example deployment plan, these resource demands may then be mapped to the infrastructure model in order to relate the demands with the respective cost. For example, costs may include weights to express values of resources on infrastructure elements. For example, a memory in an embedded system may be much smaller than a memory of a desktop computer. Thus, the memory of the embedded system may be considered as a more valuable resource. This concept may be expressed by placing cost relations on infrastructure model elements that may reflect the corresponding differences in value of the respective resources. If no resource constraints are violated, the availability of the system and the cost of utilized resources may be calculated and compared to the best plans found so far. According to an example embodiment, when all deployment plan candidates have been evaluated, or a maximum run time for the planner has elapsed, the highest ranking deployment plans may be presented to the user for selection by the user, in order to initiate the actual deployment.

Figure 3 is a block diagram illustrating an example infrastructure view 300 of an example embodiment of the system 100 of Figure 1, A device handler, for example, the device handling layer I 130, may include a device-specific part of the middleware 110 that may handle device detection and access. The device handling layer 1 130 may notify the request handling layer 150 upon detecting PEIDs, and may translate and execute the received requests in the PEID-specific protocol. Network or infrastructure nodes that include functionality of a device handler may be considered as access points for PEIDs that may be located nearby the smart item, e.g. in a garage, a depot, a warehouse, etc. Depending on the application scenario there may exist a number of device handler nodes, potentially supporting different PEID protocols, A device handler, for example, the device handling layer 1 130, may be connected to a request handler, for example, located at the request handling layer 150, via one or more high-capacity network connections, e.g. via a LAN or WAN.

A request handler located at the request handing layer 150 may include a device-independent part of the middleware which may manage incoming requests from backend applications. As discussed previously, the request handler 152 may store the incoming requests, for example, in the request buffer 157, until a PEID becomes available on the network, and may deliver the request to a device handler node to which the PEID may be connected. As the request handler 152 may include the main entry point for backend applications, the request handler 152 may be physically located nearby the backend systems.

An example scenario may include maintenance planning for trucks. Data on the operational state of a vehicle such as a truck may be collected by a PEID, for example, PEID 104, which may be embedded on a truck. The data may be transmitted to a base station upon request from a maintenance application, for example, included in application 108, in the backend. An example device handler may be located in a depot and may be connected to a request handler node located in a data center, which may accept requests from the application 108 and may notify the application 108 when a result is available, for example, in the result buffer 158. In a more complex scenario, there may be multiple device handler nodes at different locations. The PEID 104 may include an embedded system in the vehicle, e.g. an on-board computer. The PEID 104 may include multiple data sources, such as counters and attached sensors such as the sensors 118. The data sources may include, for example, sensors or counters for measuring mileage, engine temperature, revolutions per minute (RPM) or speed, and oil pressure of the vehicle, as shown in the example of Figure 3. According to an example embodiment, data sources may also include devices such as personal digital assistants (PDAs) which may communicate with a server via a wireless, intermittent connection, for example, in communication with an online ordering system, wherein the PDA communicates with the server as part of a communication path with an application located in a main server for the online ordering system. One skilled in the art of data processing will appreciate that there are many other examples of devices that may serve as data sources that may communicate within a heterogeneous system via intermittent connections.

In order to obtain a comprehensive view of the vehicle's operational status, the application 108 may request 1) current mileage; 2) engine speed, represented as a distribution of time into categories slow, medium, fast; 3) an indication of whether engine temperature remained within a given limit; and 4) trend and min/max of oil pressure.

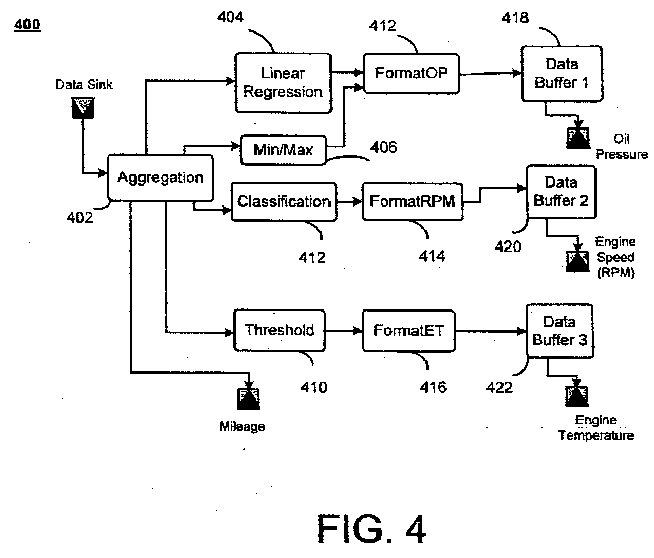

As discussed previously, within the middleware 110, the service repository 160 may provide component services which can be flexibly arranged in compositions to handle new requirements. For the example truck fleet scenario discussed above, compositions including generic component services for data analysis may be employed. Figure 4 is a block diagram illustrating an example composition 400 including generic component services, such as, for example, aggregation 402, linear regression 404, min/max 406, classification 408, and threshold 410. Their class limits, thresholds etc. may be set with configuration parameters that may become part of the composition description, which may be stored, for example, in the service metadata 162.

The generic component services may require input data to be provided in a common format. As every PEID may supply its data differently, a set of PEID-specific component services may be used to convert the data representation from the PEID into a required common format. The conversion may be performed, for example, by component services FormatOP 412, FormatRPM 414, and FormatET 416.

A data buffer component service, for example, data buffer 1 418, data buffer 2 420, or data buffer 3 422, may be used to buffer sensor data between the invocations of the component composition 400. The example aggregation component service 402 may collect the partial results of the component services and the mileage data and combine them into a final result, which may be returned to the application 108, for example, as an operational status result.

A suitable deployment plan may thus need to be determined for deploying these component services to the infrastructure 300. A deployment plan may include, for example, a set of component placements, in which every component service may be assigned to a node in the infrastructure 300. The number of possible mappings (e.g., combinations) of component services to nodes, and the number of factors influencing the quality of a deployment plan may contribute to the complexity of identifying good deployment plans.

For an infrastructure including N nodes and a composition including C component services there may be NC deployment plans to consider. For example, if N = 3 and C = 11, there may exist 311 = 177,147 possible combinations. However, a subset of these combinations may be invalid due to violations of constraints. The remaining set of valid deployment plans may thus be evaluated in terms of quality to identify the most suitable deployment plans. With regard to the selection and evaluation of valid deployment plans, resource constraints, resource demands, availability of data, and performance measures may be considered.

For example, various nodes of a network may have different hardware capacities. Such resource constraints may rule out certain deployment plans, for example, if the memory on a node is insufficient to hold all component services that are assigned to it, or if the bitrate capacity of a network connection is too low to handle an amount of data to be transmitted.

Further, component services included in a component composition may place certain resource demands on the infrastructure 300. These demands may vary among the component services, and may be dependent on other factors. For example, the bitrate requirements for a particular component composition may depend on both the load and the input/output ratio of each component service.

Thus, an example component service deployment planning decision may be complex due to 1) a large number of possible combinations of component services and nodes; 2) resource restrictions that may be very different among the nodes and network connections; 3) resource demands that may vary by component service and may be partly load-dependent; and 4) complex performance estimation due to its dependency on the deployment plan, the load model, and the characteristics of both component services and infrastructure.

While manual planning of the component deployment may be possible with simple cases, it may not be reasonable for real-world scenarios. When components or component compositions are deployed onto network nodes, at least two goals may be considered: either that deployment is optimized for performance, or to fulfill restrictions caused by resource dependencies. The first goal may include ensuring performance requirements such as response time and throughput. The second goal may rely on features of a technical environment, such as operating systems, execution environments, database connections, requirements for memory, availability of network links, etc.

However, as discussed previously, in smart item environments, a standard execution environment such as OSGi or Jini may be installed on all nodes including the smart item. Thus, components compliant to the environment may be run on every node in a network or infrastructure. As discussed previously, resources may be scarce, especially near the edges of the network. However, a goal of saving resources may need to be balanced with performance requirements to provision requested data in reasonable time.

An example deployment planning method for component services in smart item environments may include: 1) consideration of resource restrictions for every node and network connection; 2) consideration of different loads; 3) evaluation of resource demands, for example, memory, network bitrate, CPU, and energy; 4) evaluation of performance, for example, response time and throughput; and 5) integration of performance and resource consumption into a single measure for comparison and ranking of deployment plans.

Planning of component service deployment may become a complex task based on a large number of possible component placements, and factors that may influence the quality of a deployment plan. If decisions for component placement are supported by a structured method, the complexity of the task may be reduced, as well as the time that is needed for deployment planning. An example solution may thus evaluate component deployment plans with special regard to the specifics of smart item environments, particularly with regard to heterogeneous nodes and network connections, and different load parameters.

An example technique for component deployment planning may include a decision support tool, for example, to be used interactively. A user, for example, an administrator, may select models for infrastructure and component service composition, as well as a load model and a maximum running time. The example technique may, for example, provide a number of recommendations for good deployment plans, from which the user may select one to start the actual deployment process. Alternatively, the example technique may be re-run with different parameter settings.

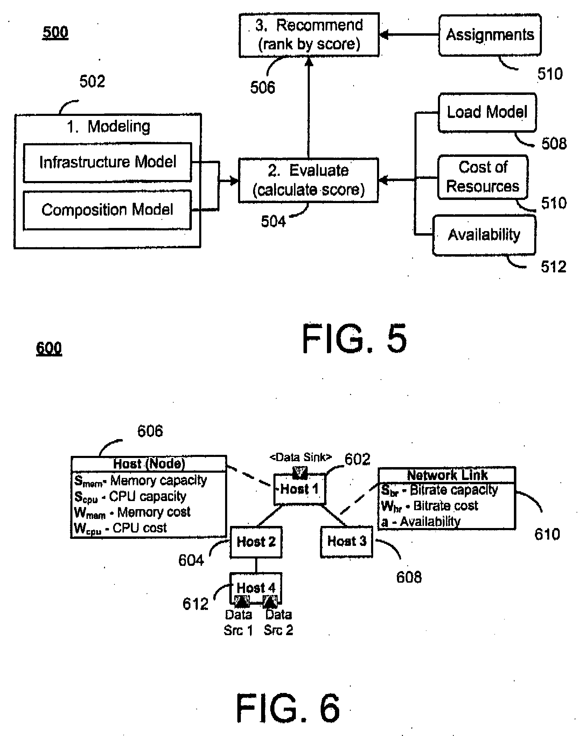

As shown in Figure 5, an example technique 500 for component deployment planning may include three elements: modeling 502, evaluation 504, and recommendation 506. For example, modeling 502 may describe a representation of the infrastructure, for example, the infrastructure 300, and the composition, for example, the composition 400. Evaluation 504 may calculate a quality measure, or score, for a given deployment plan, for example, based on a load model 508, a cost of resources 510, and an availability 512 such as an availability of connectivity. Recommendation 506 may include generating possible deployment plans, maintaining the deployment plans with best results in a list, as discussed further below. A mapping of the component services to the nodes may be performed, for example, by the distribution manager 153 based on assignments 514 resulting from the recommendation 506 of deployment plans of the component services.

As discussed previously, modeling 502 may be used to describe the infrastructure as well as the component composition, which may both be represented as annotated graphs. Additionally, a load model may express an expected load. For example, Figure 6 depicts an example undirected graph 600 describing an example infrastructure. Although not shown for every node, each node in the graph of Figure 6 may be annotated by a set of example properties, as discussed further below. In Figure 6, a node or host 1 602 includes a data sink. As shown, the host 1 602 may, for example, be located in the request handling layer 150 of Figure 3. A node or host 2 604 may be connected to the host 1 602 via an edge. The host 1 602 may be associated with a set of node properties 606, which may indicate, for example, a memory capacity, a CPU capacity that is available for component services that may be mapped to the host 1 602, a memory cost, and a CPU cost.

A host 3 608 may be connected to the host 1 602 via an edge, which may be associated with a set of connection properties, which may indicate, for example, a bitrate capacity and bitrate cost associated with the connection, and an availability associated with the connection. For the example of Figure 6, resources specified in the infrastructure model may indicate capacities which are actually available for component services, and not the general hardware equipment of a node. The host 2 604 may be located in the device handling layer 130 of Figure 3.

A host 4 612 may include a data source 1 and a data source 2, which may include, for example, sensors such as the sensors 118 of Figure 1. The host 4 612 may, for example, be located at the PEID 104 of Figure 3.

According to an example embodiment, although data sources and data sinks are shown as part of the example infrastructure of Figure 6, they may not be represented as nodes in the example infrastructure graph 600. As data sources and data sinks may not be moved to other infrastructure nodes, they may be modeled using static assignments. Static assignments may include nodes of the component graph, which may be assigned to a node of the infrastructure and may not be considered in the generation of deployment plan variants. Static assignments may thus be used for data sources and the data sink, and may also be used for user-defined assignment of components, i.e., the user may manually assign components to nodes. Static assignments may be represented as a set $A_s$ of tuples $A_{ij} = (C_i, N_j)$, where $C_i$ denotes an element from the set of component services, and $N_j$ denotes an element from the set of infrastructure nodes.

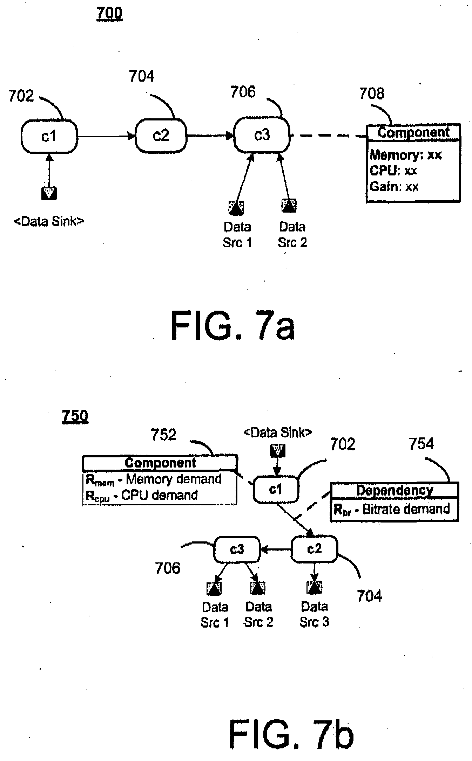

As another example, Figure 7a depicts an example component service composition 700 represented as a directed acyclic graph, whereby the edges point in the direction of invocation of example component services c1 702, c2 704, and c3 706 of the composition 700. Thus, the edges may denote which component services a particular component service depends upon, e.g., as data input or for providing a particular functionality. According to an example embodiment, data sources and data sinks may also be included in the component graph, if component services depend on them. Similar to the infrastructure graph 600, the nodes of the component composition 700 graph may be annotated with properties such as component properties 708, for example, memory, CPU, and availability, as discussed further below.

According to an example embodiment, an example load model may include a number of invocations per hour, and the message sizes for every data source in the infrastructure. As the acquisition of monitoring data from products may be performed in scheduled intervals, this example load model may be sufficient. However, the load model may also be extended to statistically distributed invocations.

In an example evaluation, a score for a given deployment plan may be calculated. Deployment plans may be represented, similarly to static assignments, as (component, node) tuples. Before an actual evaluation is performed, load-dependent resource demands may be calculated. Afterwards, the resource demands may be assigned to the infrastructure and compared to the resource constraints. According to an example embodiment, the consumed resources may then be evaluated to calculate the deployment plan's score with regard to resource consumption.

According to an example embodiment, to evaluate a deployment plan, an example quality measure may be defined which may facilitate comparisons of different deployment plan variants. For example, resource consumption may be particularly considered. However, the resource consumption of a component composition may depend only on the load model and may not change with different component placements. Moreover, a quality of a deployment plan may depend on the actual placement of components, and thus, the assessment of resource consumption alone may not be sufficient.

An example goal may include saving resources on infrastructure elements, where the resources may be particularly scarce. To incorporate this principle into an example quality measure, costs may be assigned to weight the utilization of different resources at individual nodes and edges of the infrastructure. For example, a megabyte of memory may be expressed as being much more expensive on an embedded system, for example, on the PEID 104, compared to a middleware node, for example, a node included in the device handling layer 1 130.

A similar type of weighting may be applied to network links, as the same amount of data transmitted over a GPRS connection between a PEID and a device handler, for example, between the PEID 104 and the device handling layer 1 130, may incur higher costs than on a LAN connection between a device handler and a request handler, for example, between the device handling layer 1 130 and the request handling layer 150. Costs may be assigned to every resource, for example, by a user and may represent the "exchange rates" between different resources. Thus, the user may indicate at which rate the user is willing to invest more CPU power for data processing to decrease the bitrate demand, as pre-processed data may be smaller than its corresponding raw data.

As another example, Figure 7b depicts an example component service composition 750 represented as a directed acyclic graph, whereby the edges point in the direction of invocation of example component services c1 702, c2 704, and c3 706 of the composition 700. Thus, the edges may again denote which component services a particular component service depends upon, e.g., as data input or for providing a particular functionality. According to an example embodiment, the nodes that include the component services c1 702, c2 704, and c3 706 may be annotated with component parameter values such as component values 752 that may include a memory demand and a CPU demand associated with the component service 702. According to an example embodiment, the edges connecting the component services c1 702, c2 704, and c3 706 may be annotated with dependency parameter values such as dependency parameter value 754 indicating a bitrate demand associated with an edge connecting the component services c1 702 and c2 704.

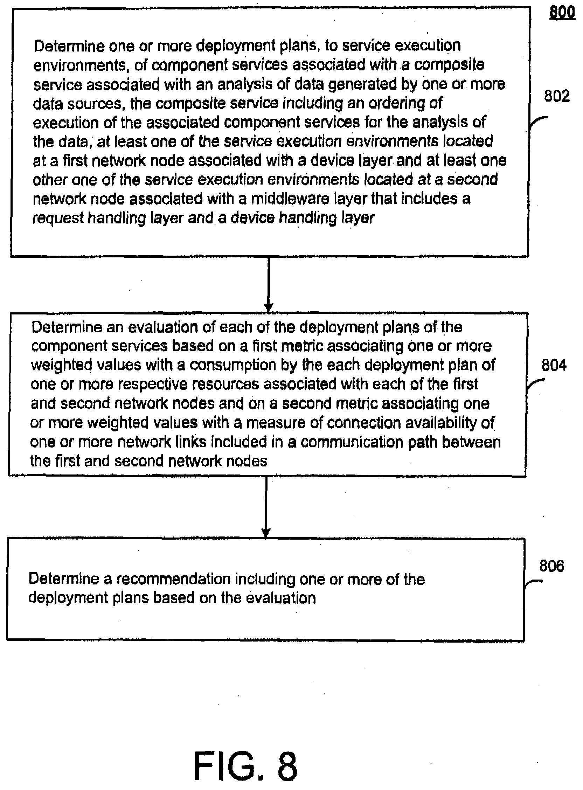

Figure 8 is a flowchart illustrating example operations of the system of Figure 1. Specifically, Figure 8 is a flowchart illustrating an example determination of a recommendation for mapping components of a composite service for processing requests from the application 108 of the system 100.

In the example of Figure 8, one or more deployment plans, to service execution environments, of component services associated with a composite service associated with an analysis of data generated by one or more data sources, may be determined, the composite service including an ordering of execution of the associated component services for the analysis of the data, at least one of the service execution environments located at a first network node associated with a device layer and at least one other one of the service execution environments located at a second network node associated with a device handling layer (802). For example, the data sources may include sensors in a smart item environment, or may include devices such as personal digital assistants (PDAs) communicating with a server, or may include devices such as an onboard computer on a vehicle which may provide data accumulated regarding conditions related to the vehicle. For example, the composite service "aggregation" may be determined to include at least ten component services as discussed previously with regard to Figure 4. For example, the distribution manager 153 may access the service metadata 162 to determine a list of the component services associated with the composite service associated with an InfoItem, for example, component services linear regression 404, min/max 406, classification 408, threshold 410, FormatOP 412, FormatRPM 414, FormatET 416, data buffer 1 418, data buffer 2 420, and data buffer 3 422. The distribution manager 153 may access the service repository 160 to obtain, for each of the component services, metadata indicating, for example, the ordering of execution of the component services, entry points for execution of each of the component services, and information regarding parameters to be passed among the component services.

If it is desired to implement "aggregation" with regard to, for example, a vehicle housing the PEID 104, the distribution manager 153 may also access the device metadata 164 to obtain information regarding, for example, the PEID 104, as well as the SEE 122 and the local data storage 120. After analysis of service metadata 162 and device metadata 164 associated with the PEID 104, the distribution manager 153 may further access the device metadata 164 for information regarding the device handling layer 1 130 and the SEE 166 to determine potential deployment plans of the component services linear regression 404, min/max 406, classification 408, threshold 410, FormatOP 412, FormatRPM 414, FormatET 416, data buffer 1 418, data buffer 2 420, and data buffer 3 422.

An evaluation of each of the deployment plans of the component services may be determined based on a first metric associating one or more weighted values with a consumption by the each deployment plan of one or more respective resources associated with each of the first and second network nodes and on a second metric associating one or more weighted values with a measure of connection availability of one or more network links included in a communication path between the first and second network nodes (804). For example, each candidate deployment plan may first be determined to be valid, and a load model may be determined. For example, an example infrastructure may be modeled as discussed with regard to Figure 6. Further, for example, the composition of component services may be modeled as discussed with regard to Figures 7a-7b.

A recommendation including one or more of the deployment plans may then be determined based on the evaluation (806). For example, the distribution manager 153 may determine the recommendation. The recommendation may be determined, for example, as described further below. If the recommendation includes more than one deployment plan, a "best" deployment plan may be selected from the recommendation, and the service manager 154 may then deploy the component services according to the selected deployment plan and may initiate execution, as described below.

Thus, the pre-processing may be flexibly and dynamically distributed via lightweight component service executables such that, for example, the raw data generated by the sensors 118 may be pre-processed at the device level, with less data needing to be transmitted from the PEID 102, as well as including further processing of the data in the device handling layer of the middleware, before intermediate results are passed up to the request handling layer 150, with a fully processed result returned to the backend application 108. The dynamic distribution may be determined via a weighted or cost-based technique, for example, to ensure acceptable levels of performance of the distribution.

According to an example embodiment, a core of an example system may include a model of a component placement problem (CPP), which may include the following elements:

1) a Composition Model (CM), which may specify the composition of components, their dependencies, and resource demands. It also contains the data sink and all data sources.
2) an Infrastructure Model (IM), which may describe the structure of the network, the resource capacities, and costs for the resources on each host and network link.
3) a deployment plan to describe the assignment of components to hosts, which may form a basis for mapping resource demands in the CM to resource capacities and respective costs in the IM. Constraints may be included to validate deployment plans.
4) evaluation functions to calculate quality measures (e.g., cost of required resources and availability) of valid deployment plans.

The model may include a number of parameters, which may be supplied when the model is instantiated. According to an example embodiment, example techniques discussed herein may determine the parameters based on an example load model.

According to an example embodiment, a bitrate demand of components may be determined using linear equations for the input/output-relations of each component. According to an example embodiment, an algorithm that traces the dependencies from a data sink to data sources and their message sizes may provide the input for these example linear equations.

According to an example embodiment, a CPU demand of components may be modeled in terms of linear equations, relating CPU utilization in percent and incoming data, expressed as the bitrate demand.

According to an example embodiment, the availability of network links may be expressed as the probability for successful access, which may be determined from the mean connection duration and the mean pause duration of a connection. According to an example embodiment, an enhanced method may consider the time required for transmission. As these approaches for determining parameters may be decoupled from the CPP model, they may be easily replaced by other parameters where appropriate.

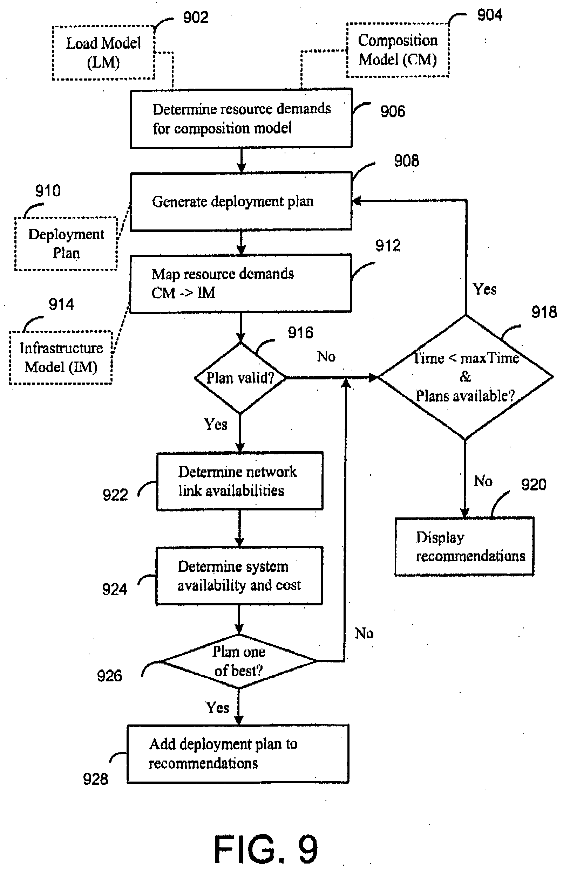

Figure 9 is a flowchart illustrating example operations of the system of Figure 1. More specifically, the flowchart of Figure 9 illustrates example operations for determining and evaluating deployment plans based at least on resource demands and network link availabilities, according to an example embodiment.

In the example of Figure 9, utilizing a load model 902 and a composition model 904, resource demands may be determined for a composition model (906). At 908, a deployment plan 910 may be generated. At 912, resource demands may be mapped from the composition model 904 to an infrastructure model 914.

At 916, it may be determined whether a plan is valid. If the plan is determined to be not valid, then at 918, it may be determined whether a time value is less than a maxTime value, and whether there are more plans available. If the determination at 918 is positive, then control passes to 908, else recommendations are displayed (920).

If the plan is determined to be valid at 916, network link availabilities may be determined (922). System availability and cost may then be determined (924).

At 926, it may be determined whether a plan is one of the best plans determined. If the plan is determined to be one of the best, then the deployment plan is added to a list of recommended plans, else control passes to 918 for further processing.

According to an example embodiment, a composition model such as the composition model 904 may be represented as a connected, directed composition graph $G$, which may include a set of nodes $C$ and set of dependencies (e.g., edges) $D \subseteq C \times C$. The set $C$ may include a set of nodes $C_R$ that may be relocated to different hosts and a set $C_F$ of nodes which may be fixed to a specific host. The number of relocatable components $C$ and dependencies $D$ may be considered as the cardinality of the respective set $C = |C_R|$ and $D = |D|$.

According to an example embodiment, each component may receive an input and produce an output of data. Therefore, each component may depend on one or more other components. In addition to components there may be other node types in the composition graph. For example, one or more data sources may only provide output of data. As another example, exactly one data sink in each composition model may only receive data input. These different types of example nodes - components, data sources, and data sink - may be represented by different symbols in the composition graph. An example data sink and example data sources may represent endpoints in the composition graph and may belong to the set $C_F$ as they may be fixed to a specific host.

For all components $c \in C$ a resource demand $R_z$ (c), where $z = \{mem, cpu\}$ may depend on memory and CPU power. Similarly, for all dependencies $d \in D$ in the composition graph, the required bitrate $R_{br}$ (d) may be assigned for the communication between the respective two components. While the memory demand may be constant, the CPU demand and the required bitrate may be calculated based on the specified load, as discussed further below.

According to an example embodiment, an infrastructure onto which components may be deployed may be modeled using a connected, undirected infrastructure graph $I$. The example model may include a set of hosts H and a set of network links $L \subseteq H \times H$.

According to an example embodiment, for each host $h \in H$ the available capacity $S_z$ (h) of memory and CPU may be stored, $z = \{mem, cpu\}$. This may also apply to network links, each of which may hold a value $S_{br}(l)$ describing its available bitrate of link $1$.

According to an example embodiment, a cost-based evaluation of resource consumption may be used to address the heterogeneity of hosts and network links in the infrastructure. Thus, the costs $W_z$ (h) may be assigned for a unit of memory and CPU power consumption, and the cost $W_{br}(l)$ may be assigned for a required unit of bandwidth.

According to an example embodiment, each network link $1$ in the infrastructure may be assigned a value $0 \leq a(1) \leq 1$ describing the availability of the network link $1$. According to an example embodiment, this measure may be used in evaluating the overall availability of a system in relation to a given deployment plan as discussed further below.

For deployment planning, every component $c_j$ may be assigned to a host $h_i$, and the assignment may be referred to as a component placement: $c_j > v(c_j) = h_i$.

For deployment planning, every component $c_j$ may be assigned to a host $h_i$, and the assignment may be referred to as a component placement: $c_j > v(c_j) = h_i$.

According to an example embodiment, a subset of nodes in the composition graph may be statically assigned to hosts, i.e., these assignments may be the same in all deployment plans. Static assignments may primarily be used, for example, for data sources and the data sink as they belong to a predetermined host and may not be relocated. However, it is also possible for a user to define additional static assignments, for example, if a component has to be placed on a specific host. User-defined static assignments may reduce the number of deployment plans to be considered for evaluation.

According to an example embodiment, in addition to static assignments, there may be an overall requirement that the demand for resources does not exceed the capacity of infrastructure elements. For the hosts this requirement may imply that the resource demand does not exceed the capacity

$$\sum_{j,\,v(c_j)=h_i} R_z(c_j) \le S_z(h_i).$$

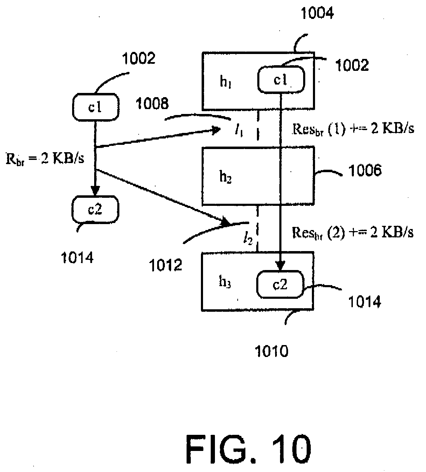

Additionally, an example constraint for the maximum bitrate demand on network links may be formulated. This may be more complicated as the communication between any pair of components may affect multiple network links in the infrastructure, as depicted in Figure 10.

As shown in Figure 10, a component c1 1002 may be located on a host $h_1$ 1004. The host $h_1$ 1004 may be directly connected to a host $h_2$ 1006 via a link $l_1$ 1008. The host $h_2$ 1006 may be directly connected to a host $h_3$ 1010 via a link $l_2$ 1012.

A component c2 1014 may be located on the host $h_3$ 1010, and may thus be connected to the component c1 1002 via the two network links link $l_1$ 1008 and link $l_2$ 1012, which may increase the probability of disconnection. As shown in Figure 10, the bitrate demand associated with a connection between the component c1 1002 and the component c2 1014 may be mapped to each of the network links link $l_1$ 1008 and link $l_2$ 1012, as the data passing between the two components may pass through both links link $l_1$ 1008 and link $l_3$ 1012.

According to an example embodiment, this constraint may be formulated by considering the communication path (e.g., the route) P between two components $c_j$ and $c_j$ within the infrastructure at a given deployment plan $v$. This path may include a set of network links connecting the hosts $v(c_i)$ and $v(c_j)$ on which the components may reside. According to an example embodiment, the path may depend on the routing strategy.

According to an example embodiment, a constraint for the maximum bitrate demand on network link $l$, may require that the sum of all communication between neighboring components that use the network link $l$ be less than the capacity of the link $l$:

$$\sum_{<i,j>} Q_l(P(c_i,c_j)) \cdot R_{br}(d(c_i,c_j)) \le S_{br}(l).$$

According to an example embodiment, an example projection may be introduced as:

$$Q_l(P(c_i,c_j)) = \begin{cases} 1 \text{ , if link } l \text{ belongs to the path } P \\ 0 \text{ , otherwise} \end{cases}$$

Table I shown below provides a summary of example parameters of the general model.

TABLE I

EXAMPLE PARAMETERS OF MODEL

| Parameter | Description |
|---|---|
| $R_z(c)$ | Demand of component c for resource $z$ |
| $R_{br}(d)$ | Bitrate demand of dependency d |
| $S_z(h)$ | Capacity of host h for resource $z$ |
| $S_{hr}(l)$ | Bitrate capacity on network link $l$ |
| $W_z(h)$ | Cost per unit of resource z on host h |
| $W_{br}(l)$ | Cost per unit of bitrate on network link $l$ |
| $a(l)$ | Availability of the network link $l$ |

According to an example embodiment, if a valid deployment plan is found, both its cost of resource consumption and its availability may be evaluated. According to an example embodiment, although both measures may be used independently for evaluating deployment plans, high availability may imply high cost of resource consumption.

According to an example embodiment, the cost of resource consumption for a given deployment plan v may be indicated by the total cost of resource demands, cumulated over all hosts and network links. Thus, an example evaluation may be determined based on including a quality measure of deployment plans in accordance with

$$K(v) = \sum_{i=1}^{H} \sum_{z} Res_z(i) \cdot W_z(i) + \sum_{j=1}^{L} Res_{br}(j) \cdot W_{br}(j) \qquad (1)$$

wherein

$H$ indicates a number of hosts or nodes in an infrastructure,

$L$ indicates a number of network links,

$Res_z(i)$ indicates a total demand for a resource on a host or node $i$,

$Res_{br}(j)$ indicates a total bitrate demand on a network link $j$,

$W_z(i)$ indicates a cost or weight of resource $z$ on the host or node $i$, and

$W_{br}(j)$ indicates a cost or weight of a unit of bandwidth on the network link $j$.

$Res_z(i)$, which may indicate an example total demand for a resource $z$ on a host or node $i$, may be expressed as

$$Res_z(i) = \sum_{j, v(c_j) = h_i} R_z(c_j)$$

Similarly, $Res_{br}(k)$, which may indicate an example total bitrate demand on a network link $k$, may be expressed as

$$Res_{br}(k) = \sum_{<i,j>} Q_k(P(c_i, c_j)) \cdot R_{br}(d(c_i, c_j))$$

According to an example embodiment, a preferable deployment plan $v_k^*$ in terms of cost may include an example deployment plan with the lowest cost:

$$\forall v \in V \mid K(v_k^*) \leq K(v)$$

For the evaluation of an availability of an example deployment plan, all availabilities of the individual network links may be aggregated. According to an example embodiment, availabilities may be considered as probabilities of success for communication between pairs of components along network links a(1). According to an example embodiment, an availability of a deployment plan may be determined as a product, such that a quality measure associated with a connection availability of one or more network links may be expressed in accordance with

$$A(v) = \prod_{i=1}^{L} a(l) \qquad (2)$$

wherein

$L$ indicates a number of network links included in an infrastructure, and

$a(l)$ indicates a quality measure of a probability of success for communication over a network link $l$.

According to an example embodiment, the determination of the link availability $a(l)$ may not be trivial; an example instantiation used an example model is explained further below. According to an example embodiment, a best deployment plan $v_a^*$ in terms of availability may include the plan with the highest availability:

$$\forall v \in V \mid A(v_a^*) \geq A(v)$$

According to an example embodiment, a general model may be independent of dimension units and value ranges; however, these may be specified for purposes of an example instantiation. According to an example embodiment, dimension units and value ranges may be defined as follows;

1) Memory: Demand and capacities may include positive, real numbers expressing memory in Megabytes (MB).

2) CPU: Measuring CPU demands across different computing systems may be complex. For example, dimensions such as clock rate or number of instructions per seconds (e.g., Million Instructions Per Second (MIPS) or FLOating point Operations Per Second (FLOPS)) are not comparable, as the number of CPU cycles required for completion of a task varies due to different CPU architectures and instruction sets. Therefore, demands may be expressed as percentages of CPU load on a reference system, which has a CPU capacity of 100%. CPU capacities of hosts may be determined in relation to the reference system, e.g., if a system has a CPU power three times higher than the reference system, its capacity may be determined as 300%.

3) Bitrate: Demand and capacities may include positive, real numbers, specifying bitrate in units of KBytes per second (KB/s).

4) Cost: Costs may only express relations between the value of different resources and may always be positive, and thus may be represented by natural numbers. Positive real numbers may be used but may slow down computation.

5) Availability: The availability of the system may be determined as a probability that a given request for information may be fulfilled. Availability may thus be determined as a real number between 0 and 1 expressing the percentage of successful requests.

According to an example embodiment, some resource demands may depend on other inputs and may be calculated before the evaluation of a deployment plan begins. For example, the CPU demand for components may depend on a data amount (e.g., load) a component has to process. According to an example embodiment, a resource demand for components may be estimated based on "resource profiles," which may be created "off-line" by measurements under different workloads.

According to an example embodiment, for calculating all component-level resource demands, except memory, a value for the load placed on the composition may be needed. According to an example embodiment, a load may refer to the number of requests a user (e.g., either a human or another system) may place on the component composition. According to an example embodiment, the requests over time may be Poisson-distributed. According to an example embodiment, an example technique may only consider static deployment planning, and thus the mean value of this deployment plan (e.g., $\lambda$-parameter) may suffice to characterize the requests over time. The example parameter may be denoted *iph* (invocations per hour) and may logically belong to the data sink. According to an example embodiment, in addition to the number of invocations, the message sizes to be transferred may also need to be determined in the load model. According to an example embodiment, as the data may originate from the data sources, the message sizes may be logically assigned to the data sources. According to an example embodiment, for each data source the size of the message returned when it is queried may need to be specified in the load model.

An example bitrate demand $R_{br}(d)$ for the communication between components may depend on the message sizes to process, and the load. According to an example embodiment, by multiplying the size of the message to process with the invocations per hour *iph*, the incoming bitrate may be obtained. At each invocation, the incoming data may be processed into outgoing data. As components process the data, the size of the outgoing data may be different. According to an example embodiment, a technique to model this for relatively simple functional blocks in building automation may use an example amplification factor (*gain*) to describe the relation of inputs to outputs in processing devices. According to an example embodiment, this approach may be extended by using a linear function $o_c$ that may describe the input/output-relation for each component

$$IORel : o_c(i_c) = e_c \cdot i_c + f_c ,$$

wherein $o_c$ may indicate an output of component c, which may depend on an input $i_c$ for this component and an amplification factor $e_c$ and a bias $f_c$. In this example model, the input $i_c$ may be denoted by $D_{br}(c)$, which may denote the sum of all incoming bitrates for a component. According to an example embodiment, the amplification factor $e_c$ and bias $f_d$ may be constant during the calculation.

According to an example embodiment, a linear function may be used for modeling small components for data processing, as output sizes that depend on the input size ($e_c > 0$) may be described, as well as outputs that are independent of the input size ($e_c = 0$). An example for the first case may include a component that produces a moving average from a time series, as the output size is proportional to the input data size. In these cases, $e_c$ may act as an amplification factor of data, which may be set to $e_c < 1$ if the amount of data is reduced, and to $e_c > 1$ if the amount of data is increased. The second case may be illustrated by a linear regression on a given time series (e.g., input), as the size of a result (e.g., output) may not change with the length of the time series.

According to an example embodiment, to calculate the bitrate demands for the whole composition model, an example recursive algorithm (e.g., Algorithm 1) may traverse the composition graph from the data sink to the data sources, where their message sizes may be retrieved. According to an example embodiment, these may then be multiplied with a time factor to convert the message size in a bitrate. At each component c the sum of incoming bitrates from all dependencies may be stored in $D_{br}(c)$, which may serve as an argument for calculating the outgoing bitrate for this component using $o_c$. The outgoing bitrate may be passed on to previous callers in an example call stack until the data sink is reached again.

According to an example embodiment, to calculate bitrate demands, an example recursive Algorithm 1, as shown below, may traverse the component graph, for example, the component graph 700 of Figure 7, from the data sink to the data sources. The example algorithm may multiply (step 14) an incoming data load with an input/output ratio (e.g., GAIN) to determine the loads on every edge based on the load model and may store each load in a property map associated that edge and included in the component graph (step 13), as described in example Algorithm 1 (calculateBitrateDemands()) below.

```
Algorithm 1: calculateBitrateDemands (comp)
Require: comp ≠ 0
1: timeFactor ← iph ÷ 3600
2: while comp has more dependencies do
3:      d ← nextDependency()
4:      inputComp ← d.opposite(comp)
5:      if NodeType of inputComp is "component" then
6:              load = calculateBitrateDemands(inputComp)
7:      else if NodeType of inputComp is "datasource" then
8:              load ← inputComp.messageSize
9:              R_br(d) ← load × timeFactor
10:     end if
11:     sumLoad ← sumLoad + load
12: end while
13: D_br(comp) ← sumLoad
14: return o_comp(sumLoad)
```

According to an example embodiment, the CPU demand $R_{cpu}(c)$ may be calculated similarly to an approach which may also be used to distribute components in a server cluster for maximum throughput. For example, the CPU demand may be described as a linear function, whereby an independent variable may represent the load. According to an example embodiment, a coefficient $p_c$ and a constant $g_c$ may be obtained by linear regression on a series of CPU utilization measurements under different loads.

$$R_{cpu} : p_c(i_c) = a_c \cdot i_c + g_c$$

According to an example embodiment, this technique may use the amount of data to be processed by the respective component Dbr(c) as load ic.

According to an example embodiment, the number of requests per second may be used as load, particularly if the messages sizes are relatively similar for each request. However, according to an example embodiment, the messages sizes may vary and thus may not be known when the CPU demand function is determined. For each component, such a linear function may be calculated with different data amounts rather than with requests per second.

According to an example embodiment, a distinction in heterogeneity of various infrastructures may provide different performance results using conventional techniques for determining resource demands and availability of data. For example, while a server cluster may include multiple identical machines, the CPU power in a smart item environment may be diverse. In order to obtain an acceptable estimation of the CPU demand on different hosts, a set of CPU demand functions for each available processor assigned to each component, or an adaptation to the actually available CPU power may be needed. According to an example embodiment, the CPU demand function based measurement may be computed on a reference system, and CPU capacities may be placed on each host that reflect the CPU power of that host in relation to the reference system. For example, if an embedded system has only 5% of the CPU power compared to the reference system, its CPU capacity may be set to 5. While this example technique may provide only a rough estimation of CPU demands, it may advantageously provide an example balance between model complexity and precision. If other scenarios require a more precise calculation of CPU demands, the example technique may be adapted to the needs of the example environment.

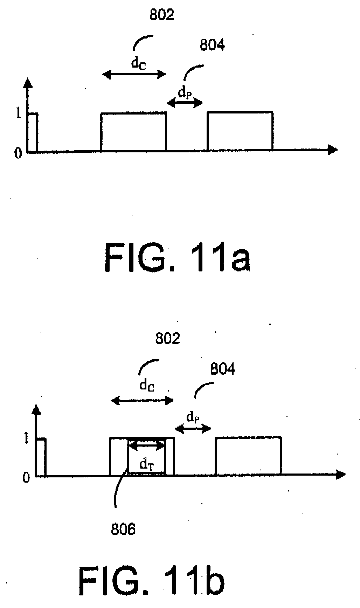

Figures 11a-11b depict example timing intervals describing example intermittent connections. According to an example embodiment, for the evaluation of the availability of a system (Equation (2)), the availability of all network links in the infrastructure may be needed. According to an example embodiment, to characterize intermittent network links, two parameters may be introduced: 1) a mean connection duration $d_C$ 802, and 2) mean pause duration $d_P$ 804, as shown in Figure 11a.

Three different example techniques are discussed below which may calculate the availability of a network link, which may provide examples of probabilities of success. For example, the probabilities of: a) network link availability, b) immediate successful execution of a request, and c) successful execution of a request within a given time frame may be distinguished. For example, availability may be denoted a($l$) for these probabilities, and example contexts may clarify the meanings of specific availabilities.

According to an example embodiment, the probability of network link availability may be defined as a ratio between connection duration $d_C$ and the duration between two connection establishments ($d_C + d_P$):

$$a = \frac{d_C}{d_C + d_P} \tag{3}$$

According to an example embodiment, the probability of immediate successful execution of a request may extend the probability of network link availability by considering the time required to transfer the requested data amount. Based on a data amount *msg* and a capacity of a network link $S_{br}$, an example required transfer time $d_T$ 806, as shown in Figure 11b, may be determined as:

$$d_T(l) = \frac{msg}{S_{br}(l)}$$

According to an example embodiment, the transfer of the requested data amount may be determined as successful if the connection is available and the transfer is timely started before the connection is terminated, as shown in Figure 11b.

$$a = \frac{d_C}{d_C + d_P} \cdot \frac{d_C - d_T}{d_C} = \frac{d_C - d_T}{d_C + d_P} \tag{4}$$

The example Equation (4) may be meaningful, provided the required transmission time $d_T$ is less than the mean connection duration time $d_C$. For example, if $d_C < d_T$, the request may not be successful and the availability of the whole system may become 0. If $d_T$ is very small compared to $d_C$, the influence of $d_T$ may be very low and thus the availability of the network link may converge to the probability defined in Equation (3) above.

$$\lim_{d_T \to 0} \frac{d_C - d_T}{d_C + d_P} = \frac{d_C}{d_C + d_P}$$

According to an example embodiment, the probability of successful execution of a request within a given time frame may build up on the immediate successful execution. Thus, the maximum time $d_{max}$ may be specified. The calculation may be based on probability of an n-fold repetition of the complementary event (e.g., "transmission unsuccessful"), whereby $n = \frac{d_{max}}{d_C + d_P}$;

$$a = 1 - (1 - \frac{d_C - d_T}{d_C + d_P})^n \quad , \quad \text{wherein } n \geq 1. \tag{5}$$

According to an example embodiment, in evaluation of the example Equation (5), three limiting cases may be distinguished: 1) if $d_{max} \ll d_C + d_P$ then a > 0, indicating that there may be no successful requests; 2) if $d_{max} \gg d_C + d_P$ then a > 1, which may indicate that transmission is substantially certain; and 3) a case $d_{max} = d_C + d_P$ may. correspond to n = 1 and the example Equation (5) may be reduced to a > $(d_C-d_T)/(d_C+d_P)$ from Equation (4).

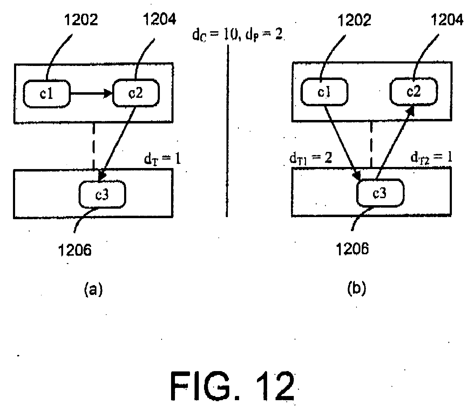

The example equations discussed above may determine the availability of a network link for a single utilization. However, the availability of a link may change if it is used multiple times. According to an example embodiment, the availability in this case may be indicated as the product of all individual utilizations, as illustrated by the example depicted in Figure 12. As shown in Figure 12, example components c1 1202 and c2 1204 may be located on a first host, and an example component c3 1206 may be located on a second host connected to the fist host. As shown in the case of Figure 12(a), a single network link utilization connecting component c2 1204 to component c3 1206 may include a value of $d_T$ = 1. If example Equation (4) is used for calculation of availability, a result

$$a = \frac{d_C - d_T}{d_C + d_P} = \frac{10 - 1}{10 + 2} = 0.75$$

may be obtained for the case in Figure 12(a) with $d_C$ = 10, $d_P$ = 2 and $d_T$ = 1. However, with multiple utilizations as in Figure 12(b), the required transmission time $d_T$ may be different for each utilization (e.g., $d_{T1}$ = 2, $d_{T2}$ = 1 for two different network link utilzations), as the amount of data may be changed by processing. Therefore, an example transmission time $d_{T1}$ for utilization $i$ may be considered for determining availability for multiple utilizations by

$$a = \prod_i \left( \frac{d_C - d_{Ti}}{d_C + d_P} \right).$$

In the example, $d_{T1}$ = 2 and $d_{T2}$ = 1 may be used to obtain an example availability

$$a = \frac{10 - 2}{10 + 2} \cdot \frac{10 - 1}{10 + 2} = \frac{8}{12} \cdot \frac{9}{12} = 0.69.$$

Similarly, the availability may be calculated with Equation (3) and Equation (5). In each case, the example availability may decrease as the number of network link utilizations increases.

When an instantiated model needs to be provided, the sources of data for input parameters may be considered. According to an example embodiment, most data may be stored as service descriptions in service repositories with their executables, i.e., the components. According to an example embodiment, service descriptions may include basic information on the resource demands of example, such as the required memory. According to an example embodiment, linear functions that describe CPU demand and the input/output-ratio may be determined through regressions on automated measurements and may be stored in service descriptions as well. According to an example embodiment, the composition model may be constructed based on this information and a process description.

According to an example embodiment, data associated with the infrastructure may be obtained using example techniques to detect hardware capabilities, including available memory, average CPU, and utilized bitrates on network links. Using this obtained information, the example infrastructure model may be generated. According to an example embodiment, the example infrastructure model may be extended by inputs for availability of network links which may be provided by the user, as it may depend on the concrete application scenario. According to an example embodiment, the user may also need to specify static assignments for components and the expected load, as these items may not be acquired automatically.

According to an example embodiment, in determining the cost of resources input parameters, a user may use real cost, i.e., prices; however, this may be infeasible if costs for units of resource consumption may be mostly unknown. Thus, it may be desirable to determine a consistent set of cost settings for all resources on the various infrastructure elements in order to obtain more meaningful results. According to an example embodiment, the user may estimate rough exchange rates between resources and may set the cost parameters accordingly. In determining such exchange rates, a user may obtain the available capacities. For example, the memory in an embedded system may be considered as more valuable than other resources because it is more restricted. Thus, according to an example embodiment, example costs may be derived from the ratios of capacities on different infrastructure elements. According to an example embodiment, a technique for to easing this process may include setting up profiles for certain types of infrastructure elements, e.g. "embedded device, " "LAN connection, "middleware server," or "GPRS connection," and assign the profiles to concrete instances of hosts and network links.

The example composition model as shown in Figure 4 describes a set of components which retrieves a report on the truck's operational status which may include the following information: (a) current mileage; (b) engine speed, as distribution of time into categories slow, medium, fast; (c) whether engine temperature remained within a given limit; and (d) trend and min/max of oil pressure. The example parameters for the example composition model are shown below in Table II.

TABLE II

EXAMPLE COMPOSITION MODEL PARAMETERS

| Component | $R_{mem}$ | IORel | $R_{CPU}$ |
|---|---|---|---|
| Aggregate | 0.15 | $1.li_c + 0.5$ | $0.15i_c+0.2$ |
| Linear Regression | 0.2 | $0i_c+0.05$ | $0.85i_c+0.1$ |
| Min/Max | 0.07 | $0i_c+0.02$ | $0.27i_c+0$ |
| Classification | 0.4 | $0i_c+2$ | $0.55i_c+0$ |
| Threshold | 0.15 | $0i_c+0.02$ | $0.3i_c+0.1$ |
| FormatOP | 0.2 | $1.4i_c+0$ | $0.22i_c+0.05$ |
| FormatRPM | 0.2 | $1.5i_c+0$ | $0.24i_c+0.03$ |
| FormatET | 0.2 | $1.4i_c+0$ | $0.22i_c+0.05$ |
| Data Buffer 1-3 | 0.08 | $1.0i_c+0$ | $0.13i_c+0$ |

The example composition may be deployed onto the infrastructure depicted in Figure 3. An example Device Handler may be located in a depot and may be connected to a Request Handler node, which may accept requests from a client application (e.g., represented by the data sink) and may notify it when the result is available. The example PEID may include an embedded system in the vehicle, for example, an on-board computer. The example PEID may include multiple data sources, such as counters and attached sensors. Example parameters for the infrastructure model are shown below in Table III.

TABLE III

EXAMPLE INFRASTRUCTURE MODEL PARAMETERS

| Hosts (Nodes) | $S_{mem}$ | $W_{mem}$ | $S_{CPU}$ | $W_{CPU}$ |
|---|---|---|---|---|
| PEID | 4 | 1500 | 5 | 300 |
| Device Handler | 512 | 10 | 100 | 40 |
| Request Handler | 2048 | 5 | 500 | 10 |
| **Network Links** | $S_{br}$ | $W_{br}$ | $d_c$ | $d_P$ |
| PEID $\leftrightarrow$ Device Handler | 8 | 100 | 300 | 10 |
| Device Handler $\leftrightarrow$ Request Handler | 8192 | 5 | 7200 | 3 |

The example parameter settings of Table II and Table III with *iph* =30, $d_{max}$ = 600, and *msgSize* = (150, 150, 200, 10) may represent a baseline setting. According to an example embodiment, a number of parameters may be varied from the baseline settings to analyze their influence on the solution space. According to an example embodiment, the results of this analysis may verify a correct construction of a CPP model.

According to an example embodiment, a requirement that a correlation between cost and availability be positive may be provided as a condition for competition. For example, a competition may exist if higher availability can only be achieved at higher cost. Graphically, a linear regression of cost and availability for the best deployment plans may result in a positive slope.

According to an example embodiment, in the evaluation of the effect of these parameters, the ratio of costs for transmission and placement and the invocations per hour may have a strong influence on the degree of competition between availability and cost.

According to an example embodiment, if a' set of deployment plan candidates has been identified and competition exists among them with regard to cost and availability, an example technique as discussed further below may be utilized to select one of the plans.

According to an example embodiment, at least three techniques may be used to resolve competition:

1) Min/Max: If the user can specify a minimum availability required by the user, the cheapest deployment plan reaching this availability may be selected:

$$v^* = \min\ (K)\ \mid\ A \geq \text{minAvail}.$$

Similarly, maximum cost may be defined by the user, and the deployment plan with highest availability may be selected which does not exceed the cost maximum:

$$v^* = \min(A)\ \mid\ K \leq \text{minCost}.$$

2) Best Ratio: If a minimum for availability or maximum for cost is unknown, a best ratio selection strategy may select the deployment plan with the best ratio of availability and cost (e.g., "best value for money"):

$$v^* = \max(\ A/\ K\ ).$$

3) Weighted: According to an example embodiment, a user may weight the evaluation criteria to resolve competition. The weights may be used to calculate a score for all candidates, and the candidate with the highest score may be selected. In a simple case, only one criterion may be weighted on a 0..1 scale:

$$v^* = \max(w_A \cdot A + (1 - w_A) \cdot K).$$

According to an example embodiment, selection of a technique for resolving competition may depend on the concrete situation of the system at the time of selection.

According to an example embodiment, a heuristic algorithm as shown below may be used for determining suitable deployment plans without scanning the whole solution space. As depicted in Figure 9, the example techniques described previously may create a number of deployment plans for evaluation and may store the deployment plans that are determined as the best plans found by the example techniques. Using an example heuristic that a low number of network uses may provide a characteristic of good deployment plans, the example heuristic algorithm may place neighboring components (e.g., components connected by a single edge in the composition model) only on the same hosts or on neighboring hosts. Thus, each dependency of the composition model may be mapped only to either 0 or 1 network links. The example heuristic algorithm, which is shown below as a recursive algorithm, may be initially invoked with the data sink as an argument, as shown in Algorithm 2 below.

```
Algorithm 2: placeDependentComp(start)
1: find host h on which start is placed
2: find all hosts H_n which are direct neighbors of hd
3: find all components K_n on which start depends
4: for all k_j in K_n do
5:     randomly select host h_i from (H_n ∪ h)
6:     place k_j on h_i
7:     placeDependentComp(k_j)
8: end for
```

Example results may show that the deployment plan candidates found by the heuristic algorithm may be closer to the optimum than almost all random component placements. Further, example results may indicate that good results may be achieved without evaluating a large number of deployment plans. However, the optimum may not be reached, as the highest availability may be achieved by placing all components on the embedded system. Thus, there may be more than two hosts between the data source and the first component. The example heuristic algorithm 2 may avoid this scenario by only allowing a maximum distance of one host between any pair of neighboring components.

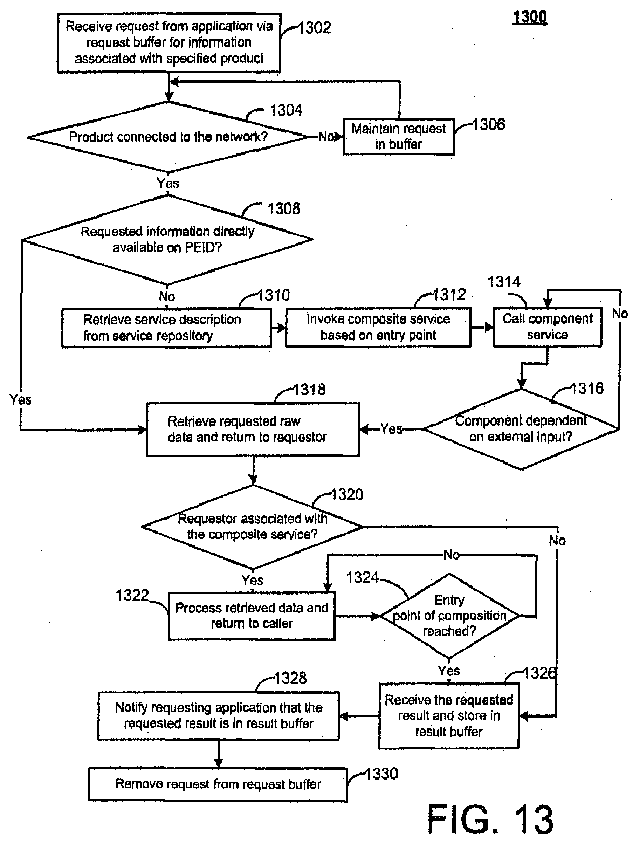

Figure 13 is a flowchart illustrating example operations of the system of Figure 1 for product lifecycle management. Two example scenarios for an application to access data from PEIDs using middleware may include a request/response scenario and a subscription scenario. In the request/response scenario, for example, a single request may be received, and a single result may be returned, whereas in the subscription scenario, a request may be ongoing. For example, a subscription request may request a response upon the occurrence of a triggering event, such as, for example, detection of a sudden spike in temperature of a product, or a request for data regarding the state of a product to be transmitted every five minutes.

Figure 13 illustrates example operations of the system of Figure 1 for product lifecycle management according to a request/response scenario. Thus, a request may be received from an application via a request buffer for information associated with a specified product (1302). For example, as discussed previously, the application 108 may place a request in which the information relating to the product 102 (e.g., manufacturing date, serial number, operational status, etc.) and an identifier of the product 102 may be specified, into the request buffer 157. According to an example embodiment, an expiration time interval may be specified, after which the request may be timed-out.

A determination may be made whether the product, e.g., the product 102 may be connected to the network (1304). For example, the connection manager 138 may be queried to determine whether the product 102 is currently connected. If the specified product is not connected to the network, the request may be buffered (1306), e.g., via the request buffer 157.

If the specified product is connected to the network, it may be determined, based on the device metadata 164 and the service metadata 162, for example, whether the requested information is directly available on a PEID, for example, the PEID 104 (1308).

If not, a service description may be retrieved from the service repository, e.g., the service repository 160 (1310), as the requested information may require data processing using data processing components. As discussed previously, the service description may include, for example, which atomic components, or component services, are included in the composite service. The description may also include an entry point for the service, for example, an entry point for the component service of the composite service that is to be called first, and various parameter settings for the involved component services, for example, thresholds, class limits, sampling frequencies, buffer capacities, etc.

The composite service may then be invoked based on the entry point (1312), for example, by the request handler 152. As discussed previously, if the invoked component service is dependent on other components, those components may be called subsequently. Thus, a component service may be called (1314). Step (1314) may be repeated until a called component service depends on external input (1316) such as a sensor value (e.g., from sensors 118), a counter value stored on the product 102, or any other data from the product 102.

The requested raw data may be retrieved from the product 102 and returned to the requestor (1318), which may be the request handler 152 or a calling component service. Step (1318) is performed if the requested information is directly available on the PEID at step (1308).

If the requestor is a calling component service (1320), the retrieved data may be processed and returned to the caller (1322). Step (1322) is repeated until the entry point of the composition is reached (1324).

When the entry point of the composition is reached (1324), or if the requestor is not a calling component service at step (1320), the requested result, for example, the analysis result, may be received, for example, by the request handler 152, and maybe stored in the result buffer (1326), for example, the result buffer 158. The requesting application, for example, the application 108, may be notified that the requested result, for example the analysis result, is in the result buffer (1328), for example the result buffer 158. The request, for example, the request for the analysis result, may then be deleted from the request buffer (1330), for example, the request buffer 157.

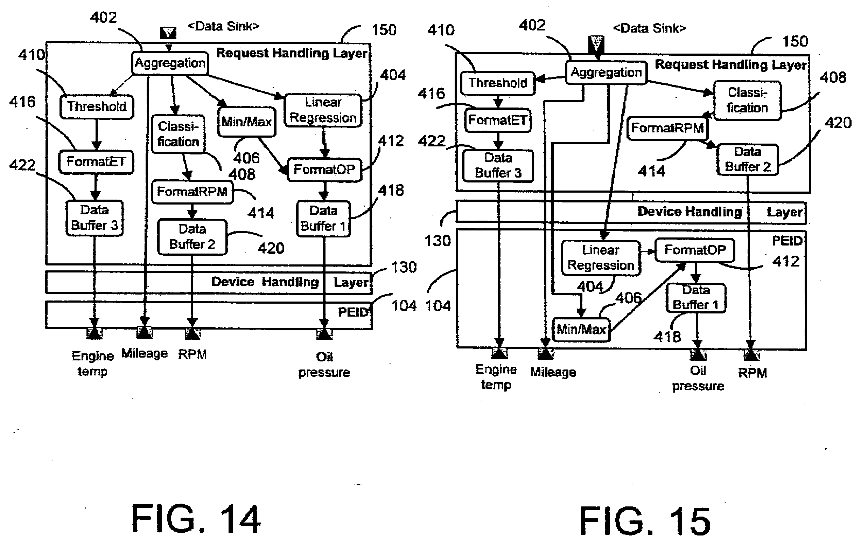

As a further example of identifying a suitable deployment plan for the example scenario involving the fleet of trucks, the required parameters may be assigned as in the models discussed previously with regard to Figures 3-7. The example distribution shown in Figure 14 may result, for example, if there are no invalid deployment plans. All components of the example are assigned to a node located in the request handling layer 150. The load for this example is so low that components are placed on the node with the cheapest resources, which is also the node that includes the data sink.

If, for example, the truck driver reports some technical problems, a decision may be made to request that the application check the vehicle's operational status more often, for example, it may now be requested every minute. The sampling frequency of all sensors may be increased accordingly to obtain more detailed results, and to allow for early identification of problems to prevent damage. If the distribution manager 153 is run, for example, with substantially more invocationsperhour to recommend deployment plans, the distribution manager 153 may recommend an example distribution as shown in Figure 15.

When only limited time may be available, or the number of combinations may be large, a complete evaluation of all possible deployment plans may not be feasible. In an example embodiment, the execution time may be limited. The generated result may thus include the best deployment plan that may be found within the given amount of time. This example embodiment may test which results are achievable when only a fraction of all possible deployment plans are evaluated. To this end, the example scenario may be evaluated with time restriction using both "random" and "exhaustive enumeration" strategies.

While the previous discussion of example embodiments has not explicitly included evaluation of CPU loads and calculation of response times, as an example, it is noted that CPU requirements may be expressed as a single number which may then be compared to the capacity. Another example technique may use a linear function to express CPU usage, for example, depending on the requests per second. Such techniques might work well, for example, within environments wherein nodes have similar CPU power, such as in grid environments.

In smart item environments, an example CPU of an example middleware node might be, for example, 20 times more powerful than a CPU of an example PEID, which may cause difficulty in expressing the CPU demand per invocation of the component service. Therefore, the CPU demand of a component service for processing a given data amount may be expressed as a percentage of CPU capacity on a reference environment. The CPU capacity of every infrastructure node may then be expressed as a ratio to the CPU power of the reference environment. With this ratio and the component's reference CPU demand the actual CPU demand may be determined for a given amount of data to be processed.

An example response time for an invocation may be determined as the sum of partial times for processing, transmission, and queuing. Methods for determining response times are known in the field of performance analysis. For example, Network Calculus may be used to calculate delays.

The example deployment planning methods for components described herein have been specifically discussed with regard to distributed components in smart item environments. These networks are characterized by a high degree of heterogeneity in terms of available hardware resources. Furthermore, there may exist a danger, for example, of overloading the system by large amounts of data which are transmitted from smart items to backend systems. The example deployment planning techniques described herein use cost-based resource consumption assessment to determine a good deployment plan of components. This example approach may include expressing substitution rates of different resources, including response time.

Thus, using techniques described herein, data from data sensors in heterogeneous environments having intermittent connectivity, for example, sensor data or smart device data, may be processed on its way through the network, with appropriate utilization of available computing power, network bandwidth, and availability of network links. In other words, the processing of data may be placed as close as possible to the data source with consideration of hardware restrictions of PEIDs at the edges of the network, which may thus reduce the amount of data effectively before it is passed on to a consuming backend application.

Besides the reduction of large amounts of data transfer and storage, another benefit may include the flexible analysis of data for different application scenarios that may exist, for example, in systems involving product lifecycle management. However, the system discussed herein is not restricted to product lifecycle management, as the system may be applicable to other examples such as supply chain management, or home automation. Generally, the system discussed herein may be used in most scenarios in which software systems need to be connected, for example, to embedded systems.

According to an example embodiment, an example deployment planning method is provided herein for components that may address specifically distributed components in smart item environments. These networks may be characterized by a high degree of heterogeneity in terms of available hardware resources. As discussed previously, example techniques are provided for evaluating deployment plans both in terms of availability and resource consumption cost. These two criteria may compete with each other among deployment plan candidates in an example solution space. Additionally, an example comprehensive model is provided for component deployment. As discussed previously, evaluating deployment plans with two criteria may aid in determining a quality of a deployment plan, as plans with nearly the same cost may have substantially different availabilities. Additionally, the number of network link uses has been discussed as a key driver for the quality of an example deployment technique, and an example heuristic derived from this finding is provided. According to an example embodiment, the application of this heuristic may advantageously help in finding good deployment plans after testing only a small fraction of all possible plans.

Implementation of the various techniques described herein may be implemented in digital electronic circuitry, or in computer hardware, firmware, software, or in combinations of them. Implementations may implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD☐ROM and DVD-ROM disks. The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. It is, therefore, to be understood that the appended claims are intended to cover all such modifications and changes as fall within the true spirit of the embodiments of the invention.

**Claims**

1. A system comprising:

   a middleware layer (110) including a request handling layer (150) and a device handling layer (130, 134), the middleware layer (110) in communication with an application (108) and a device layer including one or more devices, wherein the request handling layer (150) includes:

   a service repository (160) that is configured to store at least one composite service in association with service metadata describing an ordering of execution of component services of the composite service; and
   a distribution manager (153) that is configured to:

   determine one or more deployment plans, to service execution environments, of the component services associated with the composite service associated with an analysis of data generated by one or more data sources, the composite service including the ordering of execution of the associated component services for the analysis of the data, at least one of the service execution environments (124) located at a first network node included in the device layer and at least one other one of the service execution environments (132, 136) located at a second network node included in the middleware layer (110), determine an evaluation of each of the deployment plans of the component services based on a first metric associating one or more weighted values with a demand by the each deployment plan of one or more respective resources such as memory and CPU power associated with each of the first and second network nodes and on a second metric associating one or more weighted values with a measure of connection availability of one or more network links included in a communication path between the first and second network nodes including, the availability of network links being expressed as a probability of success for communication between pairs of components along the respective network links the probability being determined from a mean connection duration and a mean pause duration of a respective connection, determine a recommendation including one or more of the deployment plans based on the evaluation,

wherein determining the evaluation comprises determining the evaluation based on the first metric including a quality measure of deployment plans in accordance with

$$K(v) = \sum_{i=1}^{H} \sum_{z} \mathrm{Re}\, s_z(i) \cdot W_z(i) + \sum_{j=1}^{L} \mathrm{Re}\, s_{br}(j) \cdot W_{br}(j)$$

wherein
$V$ indicates a given deployment plan,
$H$ indicates a number of hosts or nodes in an infrastructure,
$L$ indicates a number of network links,
$Res_z(i)$ indicates a total demand for a resource $z$ on a host or node $i$,
$Res_{br}(j)$ indicates a total bitrate demand on a network link $j$,
$W_z(i)$ indicates a cost or weight of resource z on the host or node $i$, and
$W_{br}(j)$ indicates a cost or weight of a unit of bandwidth on the network link $j$,
and
wherein determining the evaluation comprises determining the evaluation based on the second metric including a quality measure associated with a connection availability of one or more network links in accordance with

$$A(v) = \prod_{l=1}^{L} a(l)$$

wherein
$L$ indicates a number of network links included in an infrastructure, and
$a(l)$ indicates a quality measure of a probability of success for communication over a network link $1$; and
deploy the component services according to a selected deployment plan from the recommendation.

2. The system according to claim 1 wherein the distribution manager (153) is configured to determine the one or more deployment plans to service execution environments, wherein, for each deployment plan, each of the component services is mapped to a service execution environment located within one network node of other service execution environments to which component services neighboring to the each component service in the ordering of execution are mapped in accordance the each deployment plan.

3. The system according to claim 1 or 2 wherein the distribution manager (153) includes a resource consumption manager (155) configured to evaluate each of the deployment plans based on the first metric and a connection availability manager (156) configured to evaluate each of the deployment plans based on the second metric.

4. The system according to any one of the preceding claims wherein the device layer includes one or more of a radio frequency identification (RFID) reader, a smart items device, a device within a sensor network, a sensor mote, or a product embedded information device.

5. The system according to any one of the preceding claims wherein the service repository (160) is configured to store one or more service executables and the service metadata associated with the composite service.

6. The system according to any one of the preceding claims further comprising:

   a model data storage device (163) that is configured to store a model of the composite service including a first model node associated with a first one of the component services, a second model node associated with a second one of the component services, and a directed edge between the first and second model nodes based on the ordering of execution.

7. A distribution manager (153) configured to:

determine one or more deployment plans, to service execution environments, of component services associated with a composite service associated with an analysis of data generated by one or more data sources, the composite service including an ordering of execution of the associated component services for the analysis of the data, at least one of the service execution environments (124) located at a first network node included in the device layer and at least one other one of the service execution environments (132, 136) located at a second network node included in the middleware layer (110);

determine an evaluation of each of the deployment plans of the component services based on a first metric associating one or more weighted values with a demand by the each deployment plan of one or more respective resources associated with each of the first and second network nodes and on a second metric associating one or more weighted values with a measure of connection availability of one or more network links included in a communication path between the first and second network nodes including intermittent network links, the availability of network links being expressed as a probability of success for communication between pairs of components along the respective network links the probability being determined from a mean connection duration and a mean pause duration of a respective connection;

determine a recommendation including one or more of the deployment plans based on the evaluation,

wherein determining the evaluation comprises determining the evaluation based on the first metric including a quality measure of deployment plans in accordance with

$$K(v) = \sum_{i=1}^{H} \sum_{z} \mathrm{Re}\, s_z(i) \cdot W_z(i) + \sum_{j=1}^{L} \mathrm{Re}\, s_{br}(j) \cdot W_{br}(j)$$

wherein

$V$ indicates a given deployment plan,

$H$ indicates a number of hosts or nodes in an infrastructure,

$L$ indicates a number of network links,

$Res_z(i)$ indicates a total demand for a resource z on a host or node $i$,

$Res_{br}(j)$ indicates a total bitrate demand on a network link $j$,

$W_2(i)$ indicates a cost or weight of resource $z$ on the host or node $i$, and

$W_{br}(j)$ indicates a cost or weight of a unit of bandwidth on the network link $j$,

and

wherein determining the evaluation comprises determining the evaluation based on the second metric including a quality measure associated with a connection availability of one or more network links in accordance with

$$A(v) = \prod_{l=1}^{L} a(l)$$

wherein

$L$ indicates a number of network links included in an infrastructure, and

$a(1)$ indicates a quality measure of a probability of success for communication over a network link $1$; and

deploy the component services according to a selected deployment plan from the recommendation.

**8.** The distribution manager according to claim 7 further comprising:

a resource consumption manager (155) configured to evaluate each of the deployment plans based on the first metric; and

a connection availability manager (156) configured to evaluate each of the deployment plans based on the second metric.

**9.** The distribution manager according to claim 7 or 8 wherein the device layer includes one or more of a radio frequency identification (RFID) reader, a smart items device, a device within a sensor network, a sensor mote, or a product embedded information device.

**10.** The distribution manager according to claim 7, 8 or 9 wherein the one or more respective resources includes one or more of memory, central processing unit (CPU) power, time, or bitrate.

**11.** A method comprising:

determining one or more deployment plans, to service execution environments, of component services associated with a composite service associated with an analysis of data obtained from one or more data sources, the composite service including an ordering of execution of the associated component services for the analysis of the data, at least one of the service execution environments located at a first network node associated with a device layer and at least one other one of the service execution environments located at a second network node associated with a middleware layer that includes a request handling layer and a device handling layer;

determining an evaluation of each of the deployment plans of the component services based on a first metric associating one or more weighted values with a demand by the each deployment plan of one or more respective resources such as memory and CPU power associated with each of the first and second network nodes and on a second metric associating one or more weighted values with a measure of connection availability of one or more network links included in a communication path between the first and second network nodes, the availability of network links being expressed as a probability of success for communication between pairs of components along the respective network links the probability being determined from a mean connection duration and a mean pause duration of a respective connection;

determining a recommendation including one or more of the deployment plans based on the evaluation, wherein determining the evaluation comprises determining the evaluation based on the first metric including a quality measure of deployment plans in accordance with

$$K(v) = \sum_{i=1}^{H} \sum_{z} \operatorname{Re}s_z(i) \cdot W_z(i) + \sum_{j=1}^{L} \operatorname{Re}s_{br}(j) \cdot W_{br}(j)$$

wherein

$V$ indicates a given deployment plan,

$H$ indicates a number of hosts or nodes in an infrastructure,

$L$ indicates a number of network links,

$Res_z(i)$ indicates a total demand for a resource $z$ on a host or node $i$,

$Res_{br}(j)$ indicates a total bitrate demand on a network link $j$,

$W_z(i)$ indicates a cost or weight of resource $z$ on the host or node $i$, and

$W_{br}(j)$ indicates a cost or weight of a unit of bandwidth on the network link $j$,

and

wherein determining the evaluation comprises determining the evaluation based on the second metric including a quality measure associated with a connection availability of one or more network links in accordance with

$$A(v) = \prod_{i=1}^{L} a(l)$$

wherein

$L$ indicates a number of network links included in an infrastructure, and

$a(l)$ indicates a quality measure of a probability of success for communication over a network link $1$;

deploying the component services according to a selected deployment plan from the recommendation.

**12.** The method according to claim 11 wherein determining the one or more deployment plans comprises determining the one or more deployment plans, to service execution environments, of component services associated with a composite service associated with an analysis of data obtained from one or more data sources, the composite service including an ordering of execution of the associated component services for the analysis of the data, at least one of the service execution environments located at a first network node associated with a device layer and at least one other one of the service execution environments located at a second network node associated with a middleware layer that includes a request handling layer and a device handling layer, wherein the determining the one or more deployment plans is based on traversing a composition graph and on mapping the component services to nodes included in an infrastructure graph.

**13.** The method according to any one of claims 11 or 12 further comprising:

determining a model of the composite service including a first model node associated with a first one of the component services, a second model node associated with a second one of the component services, and a directed edge between the first and second model nodes based on the ordering of execution.

**14.** The method according to claim 13 further comprising:

storing in a first storage device associated with the first model node a value indicating an amount of a first resource required by the first one of the component services;
storing in a second storage device associated with the second model node a value indicating an amount of a second resource required by the second one of the component services; and
storing in a third storage device associated with the directed edge a value indicating an amount of a third resource required by the composite service.

**15.** The method according to any one of claims 11 to 14 further comprising:

determining a model of network nodes that include the service execution environments, the model including a model node associated with each network node and a model edge associated with each network link connecting the network nodes.

**16.** The method according to claim 15 further comprising:

storing in a storage device associated with each model node one or more values indicating amounts of one or more resources that are available for the component services; and
storing in a storage device associated with each model edge one or more values indicating amounts of one or more resources that are available for the each network link.

**17.** The method according to any one of claims 11 to 16 further comprising:

determining a load model based on one or more parameters associated with one or more requests for the analysis of the data.

**18.** The method according to claim 17 wherein the one or more requests for the analysis of the data is generated by a business application located at a backend system, and wherein one or more of the data sources is associated with a product embedded information device (PEID) located at the device layer.

**19.** The method according to claim 18 wherein the one or more requests for the analysis of the data is received from a product lifecycle management (PLM) application and wherein one or more of the data sources is configured to generate data associated with a specified product.

**20.** The method according to claim 18 wherein the first metric specifies a first one of the weighted values associated with the first network node that is different from a second one of the weighted values associated with the second network node, wherein the first and second ones of the weighted values are each associated with a similar respective resource associated with each of the first and second network nodes.

**21.** The method according to any one of claims 11 to 20 wherein the one or more respective resources includes one or more of memory, central processing unit (CPU) power, time, or bitrate.

**22.** The method according to any one of claims 11 to 21 wherein the device layer includes one or more of a radio frequency identification (RFID) reader, a smart items device, a device within a sensor network, a sensor mote, or a product embedded information device.

**Patentansprüche**

**1.** System, welches Folgendes aufweist:

eine Middleware-Schicht (110) mit einer Anforderungsbehandlungsschicht (150) und einer Vorrichtungsbehandlungsschicht (130, 134), wobei die Middleware-Schicht (110) in Kommunikation mit einer Anwendung (108) und einer Vorrichtungsschicht, die eine oder mehrere Vorrichtungen aufweist, steht, wobei die Anforderungsbehandlungsschicht (150) Folgendes aufweist:

eine Dienst-Verwahrungsstelle (160), die dafür ausgelegt ist, wenigstens einen zusammengesetzten Dienst in Zusammenhang mit Dienst-Metadaten zu speichern, welche eine Ausführungsreihenfolge von Komponentendiensten des zusammengesetzten Dienstes beschreiben, und
einen Verteilungsverwalter (153), der dafür ausgelegt ist, Folgendes auszuführen:

Bestimmen eines oder mehrerer Einsatzpläne für Dienstausführungsumgebungen von den Komponentendiensten in Zusammenhang mit dem zusammengesetzten Dienst in Zusammenhang mit einer Analyse der durch eine oder mehrere Datenquellen erzeugten Daten, wobei der zusammengesetzte Dienst die Ausführungsreihenfolge der zugeordneten Komponentendienste für die Analyse der Daten aufweist, wobei sich wenigstens eine der Dienstausführungsumgebungen (124) bei einem ersten Netzknoten befindet, der in der Vorrichtungsschicht enthalten ist, und sich wenigstens eine andere der Dienstausführungsumgebungen (132, 136) an einem zweiten Netzknoten befindet, der in der Middleware-Schicht (110) enthalten ist,
Bestimmen einer Beurteilung von jedem der Einsatzpläne der Komponentendienste auf der Grundlage einer ersten Metrik, welche einen oder mehrere gewichtete Werte mit einem Bedarf jedes Einsatzplans an einer oder mehreren jeweiligen Ressourcen in der Art von Speicher und CPU-Leistung in Zusammenhang mit jedem der ersten und zweiten Netzknoten assoziiert, und auf der Grundlage einer zweiten Metrik, welche einen oder mehrere gewichtete Werte mit einem Maß der Verbindungsverfügbarkeit einer oder mehrerer Netzverbindungen, die in einem Kommunikationsweg zwischen dem ersten und dem zweiten Netzknoten enthalten sind, assoziiert, wobei die Verfügbarkeit der Netzverbindungen als eine Wahrscheinlichkeit des Erfolgs einer Kommunikation zwischen Komponentenpaaren entlang den jeweiligen Netzverbindungen ausgedrückt wird und die Wahrscheinlichkeit anhand einer mittleren Verbindungsdauer und einer mittleren Pausendauer einer jeweiligen Verbindung bestimmt wird,
Bestimmen einer Empfehlung, die einen oder mehrere der Einsatzpläne aufweist, auf der Grundlage der Beurteilung,
wobei das Bestimmen der Beurteilung ein Bestimmen der Beurteilung auf der Grundlage der ersten Metrik, die ein Qualitätsmaß von Einsatzplänen enthält, nach

$$K(v) = \sum_{i=1}^{H} \sum_{z} Res_z(i) \cdot W_z(i) + \sum_{j=1}^{L} Res_{br}(j) \cdot W_{br}(j)$$

umfasst, wobei
$v$ einen gegebenen Einsatzplan angibt,
$H$ die Anzahl der Hosts oder Knoten in einer Infrastruktur angibt,
$L$ die Anzahl der Netzverbindungen angibt,
$Res_z(i)$ den Gesamtbedarf an einer Ressource z an einem Host oder Knoten i angibt,
$Res_{br}(j)$ den Gesamtbitratenbedarf an einer Netzverbindung j angibt,
$W_z(i)$ die Kosten oder das Gewicht der Ressource z am Host oder Knoten i angibt und
$W_{br}(j)$ die Kosten oder das Gewicht einer Bandbreiteneinheit auf der Netzverbindung j angibt,
und
wobei das Bestimmen der Beurteilung ein Bestimmen der Beurteilung auf der Grundlage der zweiten Metrik, die ein Qualitätsmaß in Zusammenhang mit der Verbindungsverfügbarkeit eines oder mehrerer Netzknoten enthält, nach

$$A(v) = \prod_{l=1}^{L} a(l)$$

umfasst, wobei
$L$ die Anzahl der in einer Infrastruktur enthaltenen Netzverbindungen angibt und
$a(l)$ ein Qualitätsmaß der Wahrscheinlichkeit des Erfolgs einer Kommunikation über eine Netzverbindung l angibt, und

Einsetzen der Komponentendienste entsprechend einem aus der Empfehlung ausgewählten Einsatzplan.

2. System nach Anspruch 1, wobei der Verteilungsverwalter (153) dafür ausgelegt ist, den einen oder die mehreren Einsatzpläne für Dienstausführungsumgebungen zu bestimmen, wobei für jeden Einsatzplan jeder der Komponentendienste auf eine Dienstausführungsumgebung abgebildet wird, die sich innerhalb eines Netzknotens anderer Dienstausführungsumgebungen befindet, worauf Komponentendienste, die jedem Komponentendienst benachbart sind, entsprechend jedem Ausführungsplan in der Reihenfolge der Ausführung abgebildet werden.

3. System nach Anspruch 1 oder 2, wobei der Verteilungsverwalter (153) einen Ressourcenverbrauchsverwalter (155) aufweist, der dafür ausgelegt ist, jeden der Einsatzpläne auf der Grundlage der ersten Metrik zu beurteilen, und einen Verbindungsverfügbarkeitsverwalter (156) aufweist, der dafür ausgelegt ist, jeden der Einsatzpläne auf der Grundlage der zweiten Metrik zu beurteilen.

4. System nach einem der voranstehenden Ansprüche, wobei die Vorrichtungsschicht einen oder mehrere Hochfrequenzidentifikations-(RFID)-Leser, eine Smart-Item-Vorrichtung, eine Vorrichtung innerhalb eines Sensornetzes, einen Sensor-Mote oder eine in ein Produkt eingebettete Informationsvorrichtung aufweist.

5. System nach einem der voranstehenden Ansprüche, wobei die Dienst-Verwahrungsstelle (160) dafür ausgelegt ist, ein oder mehrere ausführbare Dienstprogramme und die Dienst-Metadaten in Zusammenhang mit dem zusammengesetzten Dienst zu speichern.

6. System nach einem der voranstehenden Ansprüche, welches des Weiteren Folgendes aufweist:

eine Modelldaten-Speichervorrichtung (163), die dafür ausgelegt ist, ein Modell des zusammengesetzten Dienstes zu speichern, einschließlich eines ersten Modellknotens in Zusammenhang mit einem ersten der Komponentendienste, eines zweiten Modellknotens in Zusammenhang mit einem zweiten der Komponentendienste und einer gerichteten Kante zwischen dem ersten und dem zweiten Modellknoten auf der Grundlage der Ausführungsreihenfolge.

7. Verteilungsverwalter (153), welcher dafür ausgelegt ist, Folgendes auszuführen:

Bestimmen eines oder mehrerer Einsatzpläne für Dienstausführungsumgebungen von den Komponentendiensten in Zusammenhang mit dem zusammengesetzten Dienst in Zusammenhang mit einer Analyse der durch eine oder mehrere Datenquellen erzeugten Daten, wobei der zusammengesetzte Dienst die Ausführungsreihenfolge der zugeordneten Komponentendienste für die Analyse der Daten aufweist, wobei sich wenigstens eine der Dienstausführungsumgebungen (124) bei einem ersten Netzknoten befindet, der in der Vorrichtungsschicht enthalten ist, und sich wenigstens eine andere der Dienstausführungsumgebungen (132, 136) an einem zweiten Netzknoten befindet, der in der Middleware-Schicht (110) enthalten ist,

Bestimmen einer Beurteilung von jedem der Einsatzpläne der Komponentendienste auf der Grundlage einer ersten Metrik, welche einen oder mehrere gewichtete Werte mit einem Bedarf jedes Einsatzplans an einer oder mehreren jeweiligen Ressourcen in Zusammenhang mit jedem der ersten und zweiten Netzknoten assoziiert, und auf der Grundlage einer zweiten Metrik, welche einen oder mehrere gewichtete Werte mit einem Maß der Verbindungsverfügbarkeit einer oder mehrerer Netzverbindungen, die in einem Kommunikationsweg zwischen dem ersten und dem zweiten Netzknoten, einschließlich intermittierender Netzverbindungen, enthalten sind, assoziiert, wobei die Verfügbarkeit der Netzverbindungen als eine Wahrscheinlichkeit des Erfolgs einer Kommunikation zwischen Komponentenpaaren entlang den jeweiligen Netzverbindungen ausgedrückt wird und die Wahrscheinlichkeit anhand einer mittleren Verbindungsdauer und einer mittleren Pausendauer einer jeweiligen Verbindung bestimmt wird,

Bestimmen einer Empfehlung, die einen oder mehrere der Einsatzpläne aufweist, auf der Grundlage der Beurteilung,

wobei das Bestimmen der Beurteilung ein Bestimmen der Beurteilung auf der Grundlage der ersten Metrik, die ein Qualitätsmaß von Einsatzplänen enthält, nach

$$K(v) = \sum_{i=1}^{H} \sum_{z} Res_{z}(i) \cdot W_{z}(i) + \sum_{j=1}^{L} Res_{br}(j) \cdot W_{br}(j)$$

bestimmt wird, wobei

$v$ einen gegebenen Einsatzplan angibt,

$H$ die Anzahl der Hosts oder Knoten in einer Infrastruktur angibt,

$L$ die Anzahl der Netzverbindungen angibt,

$Res_{z}(i)$ den Gesamtbedarf an einer Ressource z an einem Host oder Knoten i angibt,

$Res_{br}(j)$ den Gesamtbitratenbedarf an einer Netzverbindung j angibt,

$W_{z}(i)$ die Kosten oder das Gewicht der Ressource z am Host oder Knoten i angibt und

$W_{br}(j)$ die Kosten oder das Gewicht einer Bandbreiteneinheit auf der Netzverbindung j angibt,

und

wobei das Bestimmen der Beurteilung ein Bestimmen der Beurteilung auf der Grundlage der zweiten Metrik, die ein Qualitätsmaß in Zusammenhang mit der Verbindungsverfügbarkeit eines oder mehrerer Netzknoten enthält, nach

$$A(v) = \prod_{l=1}^{L} a(l)$$

bestimmt wird, wobei

$L$ die Anzahl der in einer Infrastruktur enthaltenen Netzverbindungen angibt und

$a(l)$ ein Qualitätsmaß der Wahrscheinlichkeit des Erfolgs einer Kommunikation über eine Netzverbindung l angibt, und

Einsetzen der Komponentendienste entsprechend einem aus der Empfehlung ausgewählten Einsatzplan.

8. Verteilungsverwalter nach Anspruch 7, welcher des Weiteren Folgendes aufweist:

einen Ressourcenverbrauchsverwalter (155), der dafür ausgelegt ist, jeden der Einsatzpläne auf der Grundlage der ersten Metrik zu beurteilen, und

einen Verbindungsverfügbarkeitsverwalter (156), der dafür ausgelegt ist, jeden der Einsatzpläne auf der Grundlage der zweiten Metrik zu beurteilen.

9. Verteilungsverwalter nach Anspruch 7 oder 8, wobei die Vorrichtungsschicht einen oder mehrere Hochfrequenzidentifikations-(RFID)-Leser, eine Smart-Item-Vorrichtung, eine Vorrichtung innerhalb eines Sensornetzes, einen Sensor-Mote oder eine in ein Produkt eingebettete Informationsvorrichtung aufweist.

10. Verteilungsverwalter nach Anspruch 7, 8 oder 9, wobei die eine oder die mehreren jeweiligen Ressourcen eines oder mehrerer von Speicher, Zentralverarbeitungseinheit-(CPU)-Leistung, Zeit oder Bitrate einschließen.

11. Verfahren, welches Folgendes aufweist:

Bestimmen eines oder mehrerer Einsatzpläne für Dienstausführungsumgebungen von den Komponentendiensten in Zusammenhang mit einem zusammengesetzten Dienst in Zusammenhang mit einer Analyse von von einer oder mehreren Datenquellen erhaltenen Daten, wobei der zusammengesetzte Dienst eine Ausführungsreihenfolge der zugeordneten Komponentendienste für die Analyse der Daten aufweist, wobei sich wenigstens eine der Dienstausführungsumgebungen an einem ersten Netzknoten befindet, der einer Vorrichtungsschicht zugeordnet ist, und sich wenigstens eine andere der Dienstausführungsumgebungen an einem zweiten Netzknoten befindet, der einer Middleware-Schicht zugeordnet ist, die eine Anforderungsbehandlungsschicht und eine Vorrichtungsbehandlungsschicht aufweist,

Bestimmen einer Beurteilung von jedem der Einsatzpläne der Komponentendienste auf der Grundlage einer ersten Metrik, welche einen oder mehrere gewichtete Werte mit einem Bedarf jedes Einsatzplans an einer oder mehreren jeweiligen Ressourcen in der Art von Speicher und CPU-Leistung in Zusammenhang mit jedem der ersten und zweiten Netzknoten assoziiert, und auf der Grundlage einer zweiten Metrik, welche einen oder mehrere gewichtete Werte mit einem Maß der Verbindungsverfügbarkeit einer oder mehrerer Netzverbindungen, die in einem Kommunikationsweg zwischen dem ersten und dem zweiten Netzknoten enthalten sind, assoziiert, wobei die Verfügbarkeit der Netzverbindungen als eine Wahrscheinlichkeit des Erfolgs einer Kommunikation zwischen Komponentenpaaren entlang den jeweiligen Netzverbindungen ausgedrückt wird und die Wahrscheinlichkeit anhand einer mittleren Verbindungsdauer und einer mittleren Pausendauer einer jeweiligen Verbindung bestimmt wird,

Bestimmen einer Empfehlung, die einen oder mehrere der Einsatzpläne aufweist, auf der Grundlage der Beurteilung,

wobei beim Bestimmen der Beurteilung die Beurteilung auf der Grundlage der ersten Metrik, die ein Qualitätsmaß von Einsatzplänen enthält, nach

$$K(v) = \sum_{i=1}^{H} \sum_{z} Res_z(i) \cdot W_z(i) + \sum_{j=1}^{L} Res_{br}(j) \cdot W_{br}(j)$$

bestimmt wird, wobei

$v$ einen gegebenen Einsatzplan angibt,

$H$ die Anzahl der Hosts oder Knoten in einer Infrastruktur angibt,

$L$ die Anzahl der Netzverbindungen angibt,

$Res_z(i)$ den Gesamtbedarf an einer Ressource z an einem Host oder Knoten i angibt,

$Res_{br}(j)$ den Gesamtbitratenbedarf an einer Netzverbindung j angibt,

$W_z(i)$ die Kosten oder das Gewicht der Ressource z am Host oder Knoten i angibt und

$W_{br}(j)$ die Kosten oder das Gewicht einer Bandbreiteneinheit auf der Netzverbindung j angibt, und

wobei das Bestimmen der Beurteilung ein Bestimmen der Beurteilung auf der Grundlage der zweiten Metrik, die ein Qualitätsmaß in Zusammenhang mit der Verbindungsverfügbarkeit eines oder mehrerer Netzknoten enthält, nach

$$A(v) = \prod_{l=1}^{L} a(l)$$

bestimmt wird, wobei

$L$ die Anzahl der in einer Infrastruktur enthaltenen Netzverbindungen angibt und

$a(l)$ ein Qualitätsmaß der Wahrscheinlichkeit des Erfolgs einer Kommunikation über eine Netzverbindung l angibt, und

Einsetzen der Komponentendienste entsprechend einem aus der Empfehlung ausgewählten Einsatzplan.

12. Verfahren nach Anspruch 11, wobei das Bestimmen des einen oder der mehreren Einsatzpläne Folgendes aufweist:

Bestimmen des einen oder der mehreren Einsatzpläne für Dienstausführungsumgebungen von Komponentendiensten in Zusammenhang mit einem zusammengesetzten Dienst in Zusammenhang mit einer Analyse von von einer oder mehreren Datenquellen erhaltenen Daten, wobei der zusammengesetzte Dienst eine Ausführungsreihenfolge der zugeordneten Komponentendienste für die Analyse der Daten aufweist, wobei sich wenigstens eine der Dienstausführungsumgebungen an einem ersten Netzknoten befindet, der einer Vorrichtungsschicht zugeordnet ist, und sich wenigstens eine andere der Dienstausführungsumgebungen an einem zweiten Netzknoten befindet, der einer Middleware-Schicht zugeordnet ist, die eine Anforderungsbehandlungsschicht und eine Vorrichtungsbehandlungsschicht aufweist, wobei die Bestimmung des einen oder der mehreren Einsatzpläne auf dem Durchlaufen eines Zusammensetzungsgraphs und auf einer Abbildung der Komponentendienste auf Knoten, die in einem Infrastrukturgraph enthalten sind, beruht.

13. Verfahren nach einem der Ansprüche 11 oder 12, welches des Weiteren Folgendes aufweist:

Bestimmen eines Modells des zusammengesetzten Dienstes, einschließlich eines ersten Modellknotens in Zusammenhang mit einem ersten der Komponentendienste, eines zweiten Modellknotens in Zusammenhang

35

mit einem zweiten der Komponentendienste und einer gerichteten Kante zwischen dem ersten und dem zweiten Modellknoten auf der Grundlage der Ausführungsreihenfolge.

**14.** Verfahren nach Anspruch 13, welches des Weiteren Folgendes aufweist:

Speichern eines Werts, der einen Anteil einer ersten Ressource angibt, welcher vom ersten der Komponentendienste benötigt wird, in einer ersten Speichervorrichtung in Zusammenhang mit dem ersten Modellknoten, Speichern eines Werts, der einen Anteil einer zweiten Ressource angibt, welcher vom zweiten der Komponentendienste benötigt wird, in einer zweiten Speichervorrichtung in Zusammenhang mit dem zweiten Modellknoten und

Speichern eines Werts, der einen Anteil einer dritten Ressource angibt, welcher vom zusammengesetzten Dienst benötigt wird, in einer dritten Speichervorrichtung in Zusammenhang mit der gerichteten Kante.

**15.** Verfahren nach einem der Ansprüche 11 bis 14, welches des Weiteren Folgendes aufweist:

Bestimmen eines Modells von Netzknoten, welche die Dienstausführungsumgebungen aufweisen, wobei das Modell einen Modellknoten in Zusammenhang mit jedem Netzknoten und eine Modellkante in Zusammenhang mit jeder die Netzknoten verbindenden Netzverbindung aufweist.

**16.** Verfahren nach Anspruch 15, welches des Weiteren Folgendes aufweist:

Speichern eines oder mehrerer Werte, welche Anteile einer oder mehrerer Ressourcen angeben, welche für die Komponentendienste verfügbar sind, in einer Speichervorrichtung in Zusammenhang mit jedem Modellknoten und

Speichern eines oder mehrerer Werte, welche Anteile einer oder mehrerer Ressourcen angeben, welche für jede Netzverbindung verfügbar sind, in einer Speichervorrichtung in Zusammenhang mit jeder Modellkante.

**17.** Verfahren nach einem der Ansprüche 11 bis 16, welches des Weiteren Folgendes aufweist:

Bestimmen eines Lastmodells auf der Grundlage eines oder mehrerer Parameter in Zusammenhang mit einer oder mehreren Anforderungen für die Analyse der Daten.

**18.** Verfahren nach Anspruch 17, wobei die eine oder die mehreren Anforderungen für die Analyse der Daten von einer Geschäftsanwendung erzeugt werden, die sich an einem Backend-System befindet, und wobei eine oder mehrere der Datenquellen einer in ein Produkt eingebetteten Informationsvorrichtung (PEID) zugeordnet ist, die sich auf der Vorrichtungsschicht befindet.

**19.** Verfahren nach Anspruch 18, wobei die eine oder die mehreren Anforderungen für die Analyse der Daten von einer Produktlebenszyklusverwaltungs-(PLM)-Anwendung empfangen werden und wobei eine oder mehrere der Datenquellen dafür ausgelegt werden, Daten in Zusammenhang mit einem spezifizierten Produkt zu erzeugen.

**20.** Verfahren nach Anspruch 18, wobei die erste Metrik einen ersten der gewichteten Werte in Zusammenhang mit dem ersten Netzknoten spezifiziert, der von einem zweiten der gewichteten Werte in Zusammenhang mit dem zweiten Netzknoten verschieden ist, wobei der erste und der zweite der gewichteten Werte jeweils einer ähnlichen jeweiligen Ressource in Zusammenhang mit jedem vom ersten und vom zweiten Netzknoten zugeordnet werden.

**21.** Verfahren nach einem der Ansprüche 11 bis 20, wobei die eine oder die mehreren jeweiligen Ressourcen eines oder mehrerer von Speicher, Zentralverarbeitungseinheit-(CPU)-Leistung, Zeit oder Bitrate einschließen.

**22.** Verfahren nach einem der Ansprüche 11 bis 21, wobei die Vorrichtungsschicht einen oder mehrere Hochfrequenzidentifikations-(RFID)-Leser, eine Smart-Item-Vorrichtung, eine Vorrichtung innerhalb eines Sensornetzes, einen Sensor-Mote oder eine in ein Produkt eingebettete Informationsvorrichtung aufweist.

**Revendications**

**1.** Système comportant :

une couche logicielle intermédiaire (110) comprenant une couche de traitement de demande (150) et une couche de traitement de dispositif (130, 134), la couche logicielle intermédiaire (110) en communication avec une application (108) et une couche de dispositif comprenant un ou plusieurs dispositifs, dans lequel la couche de traitement de demande (150) comprend :

un annuaire de services (160) qui est configuré pour mémoriser au moins un service mixte en association avec des métadonnées de service décrivant un ordre d'exécution de services de composants du service mixte ; et
un gestionnaire de distribution (153) qui est configuré pour :

déterminer un ou plusieurs plans de déploiement, pour des environnements d'exécution de service, des services de composants associés au service mixte associé à une analyse de données générées par une ou plusieurs sources de données,
le service mixte comprenant l'ordre d'exécution des services de composants associés pour l'analyse de données, au moins l'un des environnements d'exécution de service (124) localisé au niveau d'un premier noeud de réseau compris dans la couche de dispositif et au moins un autre des environnements d'exécution de service (132, 136) localisé au niveau d'un second noeud de réseau compris dans la couche logicielle intermédiaire (110),
déterminer une évaluation de chacun des plans de déploiement des services de composants sur la base d'une première mesure associant une ou plusieurs valeurs pondérées à une demande par chaque plan de déploiement d'une ou plusieurs ressources respectives telles qu'une mémoire et une puissance d'unité centrale de traitement (CPU) associée à chacun des premier et second noeuds de réseau et sur la base d'une seconde mesure associant une ou plusieurs valeurs pondérées à une mesure de disponibilité de connexion d'une ou plusieurs liaisons de réseau comprises dans un trajet de communication entre les premier et second noeuds de réseau comprenant, la disponibilité de liaisons de réseau être exprimée en tant que probabilité de succès pour une communication entre des paires de composants le long des liaisons de réseau respectives, la probabilité étant déterminée à partir d'une durée de connexion moyenne et d'une durée de pause moyenne d'une connexion respective,
déterminer une recommandation comprenant un ou plusieurs des plans de déploiement sur la base de l'évaluation, dans lequel la détermination de l'évaluation comporte de déterminer l'évaluation sur la base de la première mesure comprenant une mesure de qualité de plans de déploiement conformément à

$$K(v) = \sum_{i=1}^{H} \sum_{z} \operatorname{Re} s_z(i) \cdot W_z(i) + \sum_{j=1}^{L} \operatorname{Re} s_{br}(j) \cdot W_{br}(j)$$

dans laquelle
v désigne un plan de déploiement donné,
H désigne un nombre d'hôtes ou de noeuds dans une infrastructure,
L désigne un nombre de liaisons de réseau,
$\operatorname{Res}_z(i)$ désigne une demande totale pour une ressource z sur un hôte ou un noeud i,
$\operatorname{Res}_{br}(j)$ désigne une demande de taux binaire total sur une liaison de réseau j,
$W_z(i)$ désigne un coût ou une pondération de ressource z sur l'hôte ou le noeud i, et
$W_{br}(j)$ désigne un coût ou une pondération d'une unité de bande passante sur la liaison de réseau j, et
dans lequel la détermination de l'évaluation comporte de déterminer l'évaluation sur la base de la seconde mesure comprenant une mesure de qualité associée à une disponibilité de connexion d'une ou plusieurs liaisons de réseau conformément à

$$A(v) = \prod_{l=1}^{L} a(l)$$

dans laquelle
L désigne un nombre de liaisons de réseau comprises dans une infrastructure, et

a(l) désigne une mesure de qualité d'une probabilité de succès pour une communication sur une liaison de réseau l ; et

déployer les services de composants conformément à un plan de déploiement choisi à partir de la recommandation.

**2.** Système selon la revendication 1, dans lequel le gestionnaire de distribution (153) est configuré pour déterminer le ou les plans de déploiement pour des environnements d'exécution de service, dans lequel, pour chaque plan de déploiement, chacun des services de composants est mappé sur un environnement d'exécution de service localisé au sein d'un noeud de réseau d'autres environnements d'exécution de service auxquels des services de composants voisins de chaque service de composants dans l'ordre d'exécution sont mappés conformément à chaque plan de déploiement.

**3.** Système selon la revendication 1 ou 2, dans lequel le gestionnaire de distribution (153) comprend un gestionnaire de consommation de ressources (155) configuré pour évaluer chacun des plans de déploiement sur la base de la première mesure et un gestionnaire de disponibilité de connexion (156) configuré pour évaluer chacun des plans de déploiement sur la base de la seconde mesure.

**4.** Système selon l'une quelconque des revendications précédentes dans lequel la couche de dispositif comprend un ou plusieurs d'un lecteur d'identification radiofréquence (RFID), d'un dispositif d'articles intelligents, d'un dispositif à l'intérieur d'un réseau de capteurs, d'un capteur, ou d'un dispositif d'informations intégré dans un produit.

**5.** Système selon l'une quelconque des revendications précédentes, dans lequel l'annuaire de services (160) est configuré pour mémoriser un ou plusieurs exécutables de services et les métadonnées de service associées au service mixte.

**6.** Système selon l'une quelconque des revendications précédentes comportant en outre :

un dispositif de mémorisation de données de modèle (163) qui est configuré pour mémoriser un modèle du service mixte comprenant un premier noeud de modèle associé à un premier des services de composants, un second noeud de modèle associé à un second des services de composants, et un bord dirigé entre les premier et second noeuds de modèle sur la base de l'ordre exécution.

**7.** Gestionnaire de distribution (153) configuré pour :

déterminer un ou plusieurs plans de déploiement, pour des environnements d'exécution de service, des services de composants associés au service mixte associé à une analyse de données générées par une ou plusieurs sources de données,
le service mixte comprenant l'ordre d'exécution des services de composants associés pour l'analyse de données, au moins l'un des environnements d'exécution de service (124) localisé au niveau d'un premier noeud de réseau compris dans la couche de dispositif et au moins un autre des environnements d'exécution de service (132, 136) localisé au niveau d'un second noeud de réseau compris dans la couche logicielle intermédiaire (110), déterminer une évaluation de chacun des plans de déploiement des services de composants sur la base d'une première mesure associant une ou plusieurs valeurs pondérées à une demande par chaque plan de déploiement d'une ou plusieurs ressources respectives telles qu'une mémoire et une puissance d'unité centrale de traitement (CPU) associée à chacun des premier et second noeuds de réseau et sur la base d'une seconde mesure associant une ou plusieurs valeurs pondérées à une mesure de disponibilité de connexion d'une ou plusieurs liaisons de réseau comprises dans un trajet de communication entre les premier et second noeuds de réseau comprenant, la disponibilité de liaisons de réseau être exprimée en tant que probabilité de succès pour une communication entre des paires de composants le long des liaisons de réseau respectives, la probabilité étant déterminée à partir d'une durée de connexion moyenne et d'une durée de pause moyenne d'une connexion respective,
déterminer une recommandation comprenant un ou plusieurs des plans de déploiement sur la base de l'évaluation, dans lequel la détermination de l'évaluation comporte de déterminer l'évaluation sur la base de la première mesure comprenant une mesure de qualité de plans de déploiement conformément à

$$K(v) = \sum_{i=1}^{H} \sum_{z} \mathrm{Re}\,s_z(i) \cdot W_z(i) + \sum_{j=1}^{L} \mathrm{Re}\,s_{br}(j) \cdot W_{br}(j)$$

dans laquelle

v désigne un plan de déploiement donné,

H désigne un nombre d'hôtes ou de noeuds dans une infrastructure,

L désigne un nombre de liaisons de réseau,

$Res_z(i)$ désigne une demande totale pour une ressource z sur un hôte ou un noeud i,

$ReS_{br}(j)$ désigne une demande de taux binaire total sur une liaison de réseau j,

$W_z(i)$ désigne un coût ou une pondération de ressource z sur l'hôte ou le noeud i, et

$W_{br}(j)$ désigne un coût ou une pondération d'une unité de bande passante sur la liaison de réseau j, et

dans lequel la détermination de l'évaluation comporte de déterminer l'évaluation sur la base de la seconde mesure comprenant une mesure de qualité associée à une disponibilité de connexion d'une ou plusieurs liaisons de réseau conformément à

$$A(v) = \prod_{l=1}^{L} a(l)$$

dans laquelle

L désigne un nombre de liaisons de réseau comprises dans une infrastructure, et

a(l) désigne une mesure de qualité d'une probabilité de succès pour une communication sur une liaison de réseau l ; et

déployer les services de composants conformément à un plan de déploiement choisi à partir de la recommandation.

**8.** Gestionnaire de distribution selon la revendication 7, comportant en outre :

un gestionnaire de consommation de ressources (155) configuré pour évaluer chacun des plans de déploiement sur la base de la première mesure ; et

un gestionnaire de disponibilité de connexion (156) configuré pour évaluer chacun des plans de déploiement sur la base de la seconde mesure.

**9.** Gestionnaire de distribution selon la revendication 7 ou 8, dans lequel la couche de dispositif comprend un ou plusieurs d'un lecteur d'identification radiofréquence (RFID), d'un dispositif d'articles intelligents, d'un dispositif au sein d'un réseau de capteurs, d'un capteur, ou d'un dispositif d'informations intégré dans un produit.

**10.** Gestionnaire de distribution selon la revendication 7, 8 ou 9, dans lequel la ressource ou les ressources respectives comprennent un ou plusieurs parmi une mémoire, une puissance d'une unité centrale de traitement (CPU), une durée, ou un débit binaire.

**11.** Procédé comportant :

de déterminer un ou plusieurs plans de déploiement, pour des environnements d'exécution de service, des services de composants associés au service mixte associé à une analyse de données générées par une ou plusieurs sources de données, le service mixte comprenant l'ordre d'exécution des services de composants associés pour l'analyse de données,

au moins l'un des environnements d'exécution de service (124) localisé au niveau d'un premier noeud de réseau compris dans la couche de dispositif et au moins un autre des environnements d'exécution de service (132, 136) localisé au niveau d'un second noeud de réseau compris dans la couche logicielle intermédiaire (110),

de déterminer une évaluation de chacun des plans de déploiement des services de composants sur la base d'une première mesure associant une ou plusieurs valeurs pondérées à une demande par chaque plan de déploiement d'une ou plusieurs ressources respectives telles qu'une mémoire et une puissance d'unité centrale de traitement (CPU) associée à chacun des premier et second noeuds de réseau et sur la base d'une seconde mesure associant une ou plusieurs valeurs pondérées à une mesure de disponibilité de connexion d'une ou plusieurs liaisons de réseau comprises dans un trajet de communication entre les premier et second noeuds de réseau comprenant, la disponibilité de liaisons de réseau être exprimée en tant que probabilité de succès pour une communication entre des paires de composants le long des liaisons de réseau respectives, la probabilité étant déterminée à partir d'une durée de connexion moyenne et d'une durée de pause moyenne d'une connexion respective,

de déterminer une recommandation comprenant un ou plusieurs des plans de déploiement sur la base de l'évaluation, dans lequel la détermination de l'évaluation comporte de déterminer l'évaluation sur la base de la première mesure comprenant une mesure de qualité de plans de déploiement conformément à

$$K(v) = \sum_{i=1}^{H} \sum_{z} \mathrm{Re}\, s_z(i) \cdot W_z(i) + \sum_{j=1}^{L} \mathrm{Re}\, s_{br}(j) \cdot W_{br}(j)$$

dans laquelle

v désigne un plan de déploiement donné,

H désigne un nombre d'hôtes ou de noeuds dans une infrastructure,

L désigne un nombre de liaisons de réseau,

$\mathrm{Res}_z(i)$ désigne une demande totale pour une ressource z sur un hôte ou un noeud i,

$\mathrm{ReS}_{br}(j)$ désigne une demande de taux binaire total sur une liaison de réseau j,

$W_z(i)$ désigne un coût ou une pondération de ressource z sur l'hôte ou le noeud i, et

$W_{br}(j)$ désigne un coût ou une pondération d'une unité de bande passante sur la liaison de réseau j, et

dans lequel la détermination de l'évaluation comporte de déterminer l'évaluation sur la base de la seconde mesure comprenant une mesure de qualité associée à une disponibilité de connexion d'une ou plusieurs liaisons de réseau conformément à

$$A(v) = \prod_{l=1}^{L} a(l)$$

dans laquelle

L désigne un nombre de liaisons de réseau comprises dans une infrastructure, et

a(l) désigne une mesure de qualité d'une probabilité de succès pour une communication sur une liaison de réseau l ; et

de déployer les services de composants conformément à un plan de déploiement choisi à partir de la recommandation.

12. Procédé selon la revendication 11, dans lequel la détermination d'un ou plusieurs plans de déploiement comporte de déterminer le ou les plans de déploiement, pour des environnements d'exécution de service, de services de composants associés à un service mixte associé à une analyse de données obtenues à partir d'une ou plusieurs sources de données, le service mixte comprenant un ordre d'exécution des services de composants associés pour l'analyse des données, au moins l'un des environnements d'exécution de service étant localisé au niveau d'un premier noeud de réseau associé à une couche de dispositif et au moins un autre des environnements d'exécution de service étant localisé au niveau d'un second noeud de réseau associé à une couche logicielle intermédiaire qui comprend une couche de traitement de demande et une couche de traitement de dispositif, dans lequel la détermination du plan ou des plans de déploiement est basée sur la traversée d'un graphique de composition et sur un mappage des services de composants sur des noeuds compris dans un graphique d'infrastructure.

13. Procédé selon l'une quelconque des revendications 11 ou 12 comportant en outre :

de déterminer un modèle du service mixte comprenant un premier noeud de modèle associé à un premier des services de composants, un second noeud de modèle associé à un second des services de composants, et un bord dirigé entre les premier et second noeuds de modèle sur la base de l'ordre d'exécution.

14. Procédé selon la revendication 13 comportant en outre :

de mémoriser dans un premier dispositif de mémorisation associée au premier noeud de modèle une valeur indiquant une quantité d'une première ressource requise par le premier des services de composants ;

de mémoriser dans un second dispositif de mémorisation associé au second noeud de modèle une valeur indiquant une quantité d'une seconde ressource requise par le second des services de composants ; et

de mémoriser dans un troisième dispositif de mémorisation associé au bord dirigé une valeur indiquant une quantité d'une troisième ressource requise par le service mixte.

15. Procédé selon l'une quelconque des revendications 11 à 14, comportant en outre :

de déterminer un modèle de noeuds de réseau qui comprenne les environnements d'exécution de service, le modèle comprenant un noeud de modèle associé à chaque noeud de réseau et un bord de modèle associé à chaque liaison de réseau reliant les noeuds de réseau.

16. Procédé selon la revendication 15, comportant en outre :

de mémoriser dans un dispositif de mémorisation associé à chaque noeud de modèle une ou plusieurs valeurs indiquant des quantités d'une ou plusieurs ressources qui sont disponibles pour les services de composants ; et

de mémoriser dans un dispositif de mémorisation associé à chaque bord de modèle une ou plusieurs valeurs indiquant des quantités d'une ou plusieurs ressources qui sont disponibles pour chaque liaison de réseau.

17. Procédé selon l'une quelconque des revendications 11 à 16 comportant en outre :

de déterminer un modèle de charge sur la base d'un ou plusieurs paramètres associés à une ou plusieurs demandes pour l'analyse des données.

18. Procédé selon la revendication 17, dans lequel une ou plusieurs demandes pour l'analyse des données sont générées par une application commerciale localisée au niveau d'un système de suivi, et dans lequel une ou plusieurs des sources de données sont associées à un dispositif d'information intégré dans un produit (PEID) localisé au niveau de la couche de dispositif.

19. Procédé selon la revendication 18, dans lequel la demande ou les demandes pour l'analyse des données sont reçues en provenance d'une application de gestion de durée de vie de produits (PLM) et dans lequel une ou plusieurs des sources de données sont configurées pour générer des données associées à un produit spécifique.

20. Procédé selon la revendication 18, dans lequel la première mesure spécifie une première des valeurs pondérées associées au premier noeud de réseau qui est différente d'une seconde des valeurs pondérées associées au second noeud de réseau, dans lequel les première et seconde des valeurs pondérées sont chacune associées à une ressource respective similaire associée à chacun des premier et second noeuds de réseau.

21. Procédé selon l'une quelconque des revendications 11 à 20, dans lequel la ressource ou les ressources respectives comprennent une ou plusieurs parmi une mémoire, une puissance d'une unité centrale de traitement (CPU), une durée, ou un débit binaire.

22. Procédé selon l'une quelconque des revendications 11 à 21, dans lequel la couche de dispositif comprend un ou plusieurs d'un lecteur d'identification radiofréquence (RFID), d'un dispositif d'articles intelligents, d'un dispositif intégré dans un réseau de capteurs, d'un capteur, ou d'un dispositif d'informations intégré dans un produit.

100

108 Application

110 Middleware

150 Request Handling Layer

157 Request Buffer

158 Result Buffer

160 Service Repository

162 Service Metadata

163 Model Data

152 Request Handler

164 Device Metadata

165 Connection Data

154 Service Manager

153 Distribution Manager

155 Resource Consumption Manager

156 Connection Availability Manager

166 SEE

168 s1

170 s2

130 Device Handling Layer 1

142 s3

128 s4

138 Connection Manager

132 Service Execution Environment

134 Device Handling Layer 2

144 s8

146 s9

140 Connection Manager

136 Service Execution Environment

102 Product

104 PEID

126a s5

122 SEE

120 Local Data

118

106 Smart RFID Reader

126b s5

128 s4

124 SEE

112 Product

114 RFID

116 RFID

# FIG. 1

200

142
s3

128
s4

126
s5

# FIG. 2

300

Data Sink

150 Request Handling Layer
(Data Center)

LAN/WAN

130 Device Handling Layer 1
(Depot)

Wireless

104 PEID
(Vehicle)

Mileage     Engine        RPM      Oil
            Temperature            Pressure

# FIG. 3

FIG. 4

**500**

FIG. 5

**600**

FIG. 6

700

FIG. 7a

750

FIG. 7b

**800**

Determine one or more deployment plans, to service execution environments, of component services associated with a composite service associated with an analysis of data generated by one or more data sources, the composite service including an ordering of execution of the associated component services for the analysis of the data, at least one of the service execution environments located at a first network node associated with a device layer and at least one other one of the service execution environments located at a second network node associated with a middleware layer that includes a request handling layer and a device handling layer

802

Determine an evaluation of each of the deployment plans of the component services based on a first metric associating one or more weighted values with a consumption by the each deployment plan of one or more respective resources associated with each of the first and second network nodes and on a second metric associating one or more weighted values with a measure of connection availability of one or more network links included in a communication path between the first and second network nodes

804

Determine a recommendation including one or more of the deployment plans based on the evaluation

806

# FIG. 8

```
                                                              904
                                          Composition
         902                              Model (CM)
Load Model
  (LM)

              Determine resource demands         906
              for composition model

  910                                              908
                      Generate deployment plan
Deployment
   Plan
                                                   912
  914                 Map resource demands
                      CM -> IM
Infrastructure
 Model (IM)                      916        No                918
                                                     Time < maxTime
                          Plan valid?                      &
                                                     Plans available?
                           Yes

                      Determine network                 No      920
  922                 link availabilities

                                                     Display
                                                     recommendations
                      Determine system
  924                 availability and cost

                                              No
                          Plan one
  926                     of best?

                           Yes

                      Add deployment plan to
                      recommendations
  928
```

# FIG. 9

FIG. 10

FIG. 11a

FIG. 11b

FIG. 12

**1300**

Receive request from application via request buffer for information associated with specified product —1302

Product connected to the network? —1304 — No → Maintain request in buffer —1306

Yes

Requested information directly available on PEID? —1308

No —1310

Retrieve service description from service repository —1310 → Invoke composite service based on entry point —1312 → Call component service —1314 — No

Yes

Retrieve requested raw data and return to requestor —1318 ← Yes — Component dependent on external input? —1316

Requestor associated with the composite service? —1320

Yes — No

Process retrieved data and return to caller —1322 → Entry point of composition reached? —1324 — No

No

Yes

Notify requesting application that the requested result is in result buffer —1328 ← Receive the requested result and store in result buffer —1326 ←

Remove request from request buffer —1330

**FIG. 13**

FIG. 15

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JURGEN ANKE et al.** Cost-based Deployment Planning for Components in Smart Item Environments. *EMERGING TECHNOLOGIES AND FACTORY AUTOMATION, 2006. ETFA '06. IEE E CONFERENCE ON, IEEE, PI,* 01 September 2006, 1238-1245